# EUROPEAN PATENT SPECIFICATION

(11) **EP 2 830 408 B1**
(45) Date of publication and mention of the grant of the patent: **27.03.2019**
(21) Application number: 13718406.5
(22) Date of filing: 02.04.2013
(51) Int. Cl.: A01D 87/12, A01F 29/00, B65B 69/00

(54) **A BALE SPLITTER AND A METHOD FOR SPLITTING A BALE**
BALLENSPALTER UND VERFAHREN ZUM SPALTEN EINES BALLENS
DIVISEUR DE BALLES ET PROCÉDÉ POUR DIVISER UNE BALLE

(30) Priority: 30.03.2012 IE S20120163
(43) Date of publication of application: 04.02.2015
(73) Proprietor: McHale Engineering, Ballinrobe, County Mayo (IE)
(72) Inventor: MCHALE, Padraic Christopher, Clonbur County Galway (IE); MCHALE, Kevin, Tuam County Galway (IE)
(74) Representative: Gorman, Francis Fergus
(86) International application number: PCT/IE2013/000010
(87) International publication number: WO 2013/144936

(56) References cited:
- WO-A1-2006/118469
- WO-A1-2010/016045
- WO-A2-2011/070037
- FI-B- 100 961
- FR-A1- 2 918 536
- GB-A- 2 158 804
- GB-A- 2 204 557
- GB-A- 2 289 619
- US-A- 5 318 399

## Description

The present invention relates to a bale splitter, and in particular, though not limited to a bale splitter for splitting a wrapped cylindrical bale of, for example, forage material.

Cylindrical bales of forage material, for example, silage are commonly wrapped in plastics film wrapping material. The bales in general are of diameter in the range of 1 metre to 1.8 metres, and of length in the order of 1.25 metres. The bales are wrapped both circumferentially and end to end, typically in a two-axis bale wrapper, where the cylindrical bale is simultaneously rotated about its central geometrical axis and an axis extending perpendicularly to the central geometrical axis. Alternatively, such bales may be wrapped in a bale wrapper in which the bale is rotated about its central geometrical axis, and one or more rolls of the wrapping material are simultaneously revolved around the rotating bale about an axis extending perpendicularly to the central geometrical axis of the bale. The plastics film wrapping material with which such cylindrical bales are wrapped typically is provided with an adhesive coating on one major surface thereof so that as the turns of wrapping material are wrapped onto the bale with each turn overlapping the previous turn, the wrapping material is bonded by the self-adhesive coating to the previous turn of the wrapping material.

In order to access the forage material wrapped in such bales, it is necessary to split the bale in two, and then remove the forage material from the wrapping material. Bale splitters for splitting such bales are well known. Typically, such bale splitters are of the type disclosed in Published British Application No. 2,289,619. Such bale splitters are provided with a main support element, which is provided with mounting brackets for mounting the bale splitter to the three-point linkage of a tractor or to a front end loader arm or a back actor arm of a tractor. Two or more tines for engaging the bale adjacent a lower end thereof extend from the support element, and an elongated knife is pivotally carried in the support element, so that with a bale supported on the tines, the knife is pivotal downwardly through the bale for splitting the bale, as well as the wrapping material on the bale.

A problem with such bale splitters is that once the bale has been split into two halves, it is relatively difficult to separate the forage material from the plastics material, without manual intervention whereby the forage material is typically removed from the wrapping film by a fork or other such handheld implement. This is a rather labour intensive and time consuming task. While attempts have been made to address this problem by providing a bale splitter with a clamp mounted on the bale splitter to grip and hold the wrapping film while the baled material is being discharged from the bale splitter, such bale splitters are unsatisfactory, in that the clamp is unreliable and may fail to grip the wrapping film, or if the clamp does grip the wrapping film, the clamp may fail to release the wrapping film when the baled material has been discharged from the bale splitter. Both failures of the clamp require manual intervention in order to separate the baled material from the wrapping film.

PCT Specification No. WO 2010/016045 of Murphy discloses a bale splitter for splitting a wrapped bale and for separating the wrapping material from the bale. The bale splitter of Murphy comprises a support framework which is adapted for coupling to a front end loader arm of a tractor. A plurality of spaced apart parallel tines extend from the support framework for supporting a bale. A cutting blade which extends transversely of the tines is carried on a pair of carrier arms which are pivotally coupled to the support framework, so that the cutting blade is urgeable downwardly towards the tines for splitting a bale in two, which is supported on the tines. A grab is mounted on the support framework so that when a bale is engaged by the bale splitter, the grab grips the wrapping material for retaining the wrapping material until the bale including the wrapping material has been split by the cutting blade, and the baled material has been discharged from the wrapping material.

There is therefore a need for a bale splitter which allows the baled material to be separated from the wrapping material of the bale without the need for manual intervention, or at least with minimum manual intervention.

The present invention is directed towards providing such a bale splitter.

According to the invention there is provided a bale splitter a bale splitter comprising a support element adapted for mounting on a front end loader arm or a back actor arm of a tractor or other prime mover, a pair of spaced apart first tines extending from the support element, a knife moveably mounted on the support element and being co-operable with the tines for splitting the bale, and a primary engagement means for engaging the wrapping material, wherein a disengagement means is provided, and the disengagement means is co-operable with the first tines for disengaging the wrapping material from the primary engagement means.

Preferably, the primary engagement means is configured for engaging and retaining the wrapping material on the bale splitter while the material of the bale is being separated from the wrapping material. Advantageously, the primary engagement means is configured to engage the wrapping material during splitting of the bale.

Preferably, the disengagement means is adapted for disengaging the wrapping material from the primary engagement means when the material of the bale has been separated from the wrapping material.

In one aspect of the invention at least one of the primary engagement means and the disengagement means is moveable relative to the first tines for disengaging the wrapping material from the primary engagement means.

In another aspect of the invention the primary engagement means and the disengagement means are moveable relative to the first tines for disengaging the wrapping material from the primary engagement means.

In a further aspect of the invention the primary engagement means is moveable relative to the first tines from a first state with the wrapping material engaged by the primary engagement means to a second state with the wrapping material disengaged from the primary engagement means.

Preferably, the primary engagement means is configured so that the spacing between the primary engagement means and the first tines in the second state of the primary engagement means is greater than the spacing between the primary engagement means and the first tines in the first state of the primary engagement means for stretching the wrapping material between the primary engagement means and the first tines in the second state of the primary engagement means to disengage the wrapping material from the primary engagement means.

Preferably, the means for disengaging the wrapping material from the primary engagement means comprises a means for moving the primary engagement means from the first state thereof to the second state.

In a further aspect of the invention the disengagement means is moveable relative to the first tines from a first state with the wrapping material engaged by the primary engagement means to a second state with the wrapping material disengaged from the primary engagement means.

Preferably, the disengagement means is configured so that the spacing between the disengagement means and the first tines in the second state of the disengagement means is greater than the spacing between the disengagement means and the first tines in the first state of the disengagement means for stretching the wrapping material between the disengagement means and the first tines in the second state of the disengagement means to disengage the wrapping material from the primary engagement means. Advantageously, the disengagement means is configured to stretch the wrapping material between the disengagement means and the first tines in the second state of the disengagement means for disengaging the wrapping material from the primary engagement means.

In another aspect of the invention the primary engagement means and the disengagement means are moveable simultaneously between the respective first states and the respective second states thereof.

Preferably, the first tines are adapted to support the bale on a top side of the tines with a portion of the wrapping material of the bale extending beneath the first tines.

Advantageously, the disengagement means is configured so that in the second state thereof the disengagement means is co-operable with the first tines for stretching the wrapping material of the split bale between the first tines and the disengagement means for disengaging the wrapping material from the primary engagement means. Preferably, the disengagement means is configured to engage the wrapping material as the bale is being split.

In another aspect of the invention a carrier means is provided for carrying the primary engagement means. Preferably, a pair of the carrier means is provided, one of the carrier means being located to one side of the first tines, and the other carrier means being located to the opposite side of the first tines with the first tines located between the respective carrier means. Advantageously, each carrier means carries at least one primary engagement means. Ideally, a plurality of the primary engagement means are located on each carrier means spaced apart from each other.

In another aspect of the invention each carrier means is moveable relative to the first tines for moving the at least one primary engagement means between the first state of the primary engagement means and the second state thereof. Preferably, each carrier means is moveable between a first state with the corresponding at least one primary engagement means in the first state, and a second state with the corresponding at least one primary engagement means in the second state. Advantageously, each carrier means is configured so that in the second state thereof the carrier means is located at a distance from the first tines which is greater than the distance of the carrier means from the first tines in the first state of the carrier means.

Preferably, each carrier means is configured so that in the first state thereof the corresponding at least one primary engagement means is disposed in the first state for engaging the wrapping material during splitting of the bale, and in the second state thereof the corresponding at least one primary engagement means is disposed in the second state for disengaging the wrapping material from the primary engagement means.

Advantageously, each carrier means comprises an elongated carrier member. Preferably, the primary engagement means extend from and are spaced apart longitudinally along the corresponding carrier member.

Advantageously, each primary engagement means comprises a primary piercing member for piercing and engaging the wrapping material. Preferably, each primary piercing member terminates in a piercing point.

Advantageously, each primary engagement means extends radially outwardly from the corresponding carrier member.

Preferably, the first tines define a first plane.

Preferably, each primary engagement means is configured to extend substantially perpendicularly to the first plane defined by the first tines when the primary engagement means is in the first state.

Preferably, each primary engagement means is configured to extend substantially parallel to the first plane defined by the first tines or at an angle to the first plane with a distal end of the primary engagement means extending towards the first plane when the primary engagement means is in the second state.

Advantageously, each primary engagement means is configured to extend substantially perpendicularly to the first plane defined by the first tines with a distal end of the primary engagement means extending downwardly towards the first plane when the primary engagement means is in the second state.

Preferably, each carrier means is configured so that in the first state thereof the carrier means lies in the first plane defined by the first tines, below the first plane, or above the first plane but adjacent thereto, and in the second state the carrier means lies above the first plane defined by the first tines.

In another aspect of the invention one disengagement means is provided corresponding to each carrier means.

Preferably, each disengagement means comprises a release member. Advantageously, a pair of the release members are provided, one of the release members being located to one side of the first tines, and the other release member being located to the opposite side of the first tines with the first tines being located between the respective release members. Ideally, the carrier means are located between the release members, the carrier means being spaced apart from the release members and the first tines.

Advantageously, each release member comprises an elongated member. Preferably, each release member extends substantially parallel to the adjacent one of the first tines.

Preferably, each carrier means extends substantially parallel to the adjacent one of the first tines.

Advantageously, the first tines extend substantially parallel to each other.

Preferably, each release member is moveable relative to the first tines from a first state to a second state for disengaging the wrapping material from the primary engagement means of the corresponding carrier means. Preferably, each release member is configured relative to the corresponding one of the carrier means and the first tines to stretch the wrapping material between the release member and the first tines in the second state of the release member.

Advantageously, each release member is configured so that in the first state thereof the release member lies in the first plane defined by the first tines, below the first plane, or above the first plane but adjacent thereto, and in the second state the release member lies above the first plane defined by the first tines.

Preferably, each carrier means and the corresponding one of the release members define a corresponding second plane, and the carrier means and the release members are configured so that in the first states of each carrier means and the corresponding one of the release members the second planes defined by the respective carrier means and the corresponding ones of the release members lie substantially in the first plane defined by the first tines, below the first plane, or above the first plane but adjacent thereto, and in the second states of each carrier means and the corresponding one of the release members the second planes defined by the respective carrier means and the corresponding ones of the release members lie at respective angles greater than zero degrees to the first plane defined by the first tines.

Preferably, the carrier means and the corresponding one of the release members are configured so that the second plane defined by each carrier means and the corresponding one of the release members lies substantially parallel to the first plane defined by the first tines when the carrier means and the corresponding one of the release members is in the first state.

Preferably, the carrier means and the corresponding one of the release members are configured so that the second plane defined by each carrier means and the corresponding one of the release members is urged through an angle of approximately 90° relative to the first plane defined by the first tines as the carrier means and the corresponding one of the release members are being urged between the first states thereof and the second states thereof.

Preferably, the carrier means and the corresponding ones of the release members are configured so that the second plane defined by each carrier means and the corresponding one of the release members is urged through an angle greater than 90° relative to the first plane defined by the first tines as the carrier means and the corresponding one of the release member are being urged between the first states thereof and the second states thereof.

Preferably, each carrier means and the corresponding one of the release members are simultaneously moveable between the respective first states and the respective second states thereof.

In a further aspect of the invention each carrier means is carried on a corresponding carrier element, the carrier element being moveable between a first state and a second state for urging the carrier means between the first state and the second state, respectively, thereof.

In another aspect of the invention the carrier element of each carrier means carries the corresponding one of the release members.

Preferably, each carrier element is pivotally coupled to the support element about a primary carrier pivot axis extending substantially parallel to the first tines, and is pivotal between the first and second states thereof about the primary carrier pivot axis. Advantageously, each carrier element is pivotal about the corresponding primary carrier pivot axis through an angle greater than zero. Preferably, each carrier element is pivotal about the corresponding primary carrier pivot axis through an angle of at least 90°.

Advantageously, each carrier element is pivotal about the corresponding primary carrier pivot axis through an angle greater than 90°.

Preferably, each carrier element is pivotal about the corresponding primary carrier pivot axis through an angle of approximately 180°.

Advantageously, each carrier element comprises a pivot arm pivotally connected to the support element about the primary carrier pivot axis, and a carrier arm extending from the pivot arm. Preferably, the carrier arm of each carrier element carries the corresponding carrier means.

Preferably, the carrier arm of each carrier element carries the corresponding release member.

Advantageously, the carrier arm of each carrier element is pivotally connected to the pivot arm about a secondary carrier pivot axis extending substantially parallel to the first tines, the carrier arm being pivotal about the secondary carrier pivot axis of each carrier element between a first state and a second state, and the carrier arm of each carrier element is resiliently urged by a resilient urging means into the first state, so that when the corresponding carrier element is in the first state, and the carrier arm is in the first state, the corresponding one or both of the carrier means and the release member is in the corresponding one of the first state.

Advantageously, the carrier arm of each carrier element is configured to be pivotal about the secondary carrier pivot axis thereof against the resilient urging means to the second state with one or both of the corresponding one of the carrier means and the release member lying below the first plane defined by the first tines. Preferably, the resilient urging means comprises a spring. Advantageously, the resilient urging means comprises a torsion spring.

Preferably, an actuating means is provided for moving each carrier element between the first state and the second state thereof.

Preferably, the first tines are configured for engaging the bale with a portion of the wrapping material located below the first tines, and with the wrapping material extending over each carrier means in the first state. Advantageously, the release members are configured relative to the tines so that in the first state of the release members the wrapping material extends over the release members.

Advantageously, at least one secondary engagement means is provided on each release member for engaging the wrapping material. Preferably, each secondary engagement means is adapted for engaging the wrapping material while the release member is disengaging the wrapping material from the primary engagement means.

Alternatively, the primary engagement means comprises at least one engagement hook coupled to the support element. Preferably, each engagement hook is pivotally coupled to the support element. Preferably, each engagement hook is located at a level below the level of the first tines. Advantageously, a means is provided for moving the engagement hooks from an engaged state to a disengaged state.

Preferably, a pair of engagement hooks are provided, the engagement hooks being located on respective opposite sides of the first tines with the first tines located therebetween. Advantageously, the engagement hooks are located between the pair of the release members, with the engagement hooks being spaced apart from the first tines and from the release members. Preferably, each engagement hook is coupled to a corresponding one of the carrier elements. Advantageously, each engagement hook is pivotally coupled to the corresponding carrier element.

Preferably, each primary engagement means which is mounted on the carrier means is urgeable between an engaged state extending from the carrier means and a disengaged state located within the carrier means. Preferably, each primary engagement means is urgeable between the engaged state and the disengaged state through an opening in the carrier means.

Advantageously, the disengagement means comprises a camming member located in the carrier means for urging the primary engagement means between the disengaged state and the engaged state. Ideally, each primary engagement means is pivotally mounted in the carrier means.

Alternatively, each carrier means is rotatably mounted about a longitudinally extending rotational axis. Preferably, the rotational axis of each carrier member coincides with the central longitudinal geometrical axis of the carrier member. Advantageously, the disengagement means comprises a means for rotating the corresponding carrier means between the first state and the second state. Preferably, the means for rotating each carrier means is adapted for rotating the carrier means through a rotational angle of at least 90°. Advantageously, the means for rotating each carrier means is adapted for rotating the carrier means through a rotational angle of up to 270°.

Preferably, one of the primary engagement means and the disengagement means is moveable relative to the other one of the primary engagement means and the disengagement means for disengaging the primary engagement means from the wrapping material.

Preferably, the knife defines a cutting edge for splitting the bale, and for cutting through a portion of the wrapping material of the bale, and the first tines define a gap therebetween for accommodating at least a part of the cutting edge of the knife therethrough with the knife co-operating with the first tines for splitting the bale. Advantageously, the knife is pivotally mounted on the support element about a pivot axis extending transversely of the first tines and is pivotal from a first state spaced apart from the first tines and defining with the first tines a space for accommodating the bale between the first tines and the knife, and a second state with a substantial portion of the cutting edge of the knife having passed through the gap defined between the first tines.

Preferably, a proximal portion of the cutting edge of the knife is configured so that the proximal portion of the knife does not pass through the gap defined between the first tines to prevent severing of at least a portion of the wrapping material by the knife.

Preferably, a drive means is provided for urging the knife from the first state to the second state for splitting the bale.

Advantageously, at least one second tine is located on each side of the first tines. Advantageously, each second tine is located in or above the first plane defined by the first tines. Preferably, each second tine is spaced apart from the adjacent one of the first tines.

Preferably, the bale splitter is adapted for splitting a cylindrical bale.

Advantageously, the bale splitter is adapted for splitting a bale wrapped with wrapping film of plastics material.

In one embodiment, the bale comprises forage material.

In another embodiment, the bale comprises silage.

The advantages of the bale splitter according to the invention are many. A particularly important advantage of the invention is that a wrapped bale which is wrapped with plastics film wrapping material, or indeed any other type of wrapping material, may be readily split by the bale splitter according to the invention, and once split, the baled material is readily separated from the wrapping material, and the wrapping material can then be deposited in a location separate from the location at which the baled material is deposited. The entire bale splitting, separating of the material of the bale from the wrapping material, and depositing of the material of the bale and the wrapping material in separate locations is carried out substantially without any manual intervention.

The invention will be more clearly understood from the following description of some preferred embodiments thereof, which are given by way of non-limiting example only, in which:
Fig. 1 is a front perspective view of a bale splitter according to the invention,
Fig. 2 is a perspective view of the bale splitter of Fig. 1 illustrating a portion of the bale splitter in a different state to that of Fig. 1,
Fig. 3 is a perspective view of the bale splitter of Fig. 1 in the state of Fig. 2,
Fig. 4 is another front perspective view of the bale splitter of Fig. 1 illustrating another portion of the bale splitter in a different state to that of Fig. 1,
Fig. 5 is a rear perspective view of the bale splitter of Fig. 1,
Fig. 6 is a front end elevational view of the bale splitter of Fig. 1 in use,
Fig. 7 is a side end elevational view of the bale splitter of Fig. 1 also in use,
Fig. 8 is a front elevational view of the bale splitter of Fig. 1 in use with parts of the bale splitter 1 in different states to those of Figs. 6 and 7,
Fig. 9 is a front elevational view of the bale splitter of Fig. 1 also in use,
Fig. 10 is a perspective view of the bale splitter of Fig. 1, in use, in a different orientation to that of Figs. 1 to 9,
Fig. 11 is a perspective view of the bale splitter of Fig. 1, in use, in the orientation of Fig. 10, but with portions of the bale splitter in a different state to that of Fig. 10,
Fig. 12 is a side elevational view of a bale splitter according to another embodiment of the invention,
Fig. 13 is a side elevational view of the bale splitter of Fig. 12 with parts of the bale splitter in different states to those of Fig. 12,
Fig. 14 is a front elevational view of a portion of the bale splitter of Fig. 12,
Fig. 15 is a front elevational view of a bale splitter according to another embodiment of the invention,
Fig. 16 is a front elevational view of the bale splitter of Fig. 15 illustrating parts of the bale splitter of Fig. 15 in a different state to that of Fig. 15,
Fig. 17 is a side elevational view of a portion of a bale splitter according to another embodiment of the invention,
Fig. 18 is a cross-sectional side elevational view of a detail of the portion of the bale splitter of Fig. 17,
Fig. 19 is a perspective view of a bale splitter according to another embodiment of the invention,
Fig. 20 is a front perspective view of the bale splitter of Fig. 19 with portions of the bale splitter in different states to that of Fig. 19,
Fig. 21 is a front elevational view of the bale splitter of Fig. 19 in use,
Fig. 22 is a front elevational view of the bale splitter of Fig. 19 also in use,
Fig. 23 is a perspective view of a bale splitter according to another embodiment of the invention,
Fig. 24 is another perspective view of the bale splitter of Fig. 23 illustrating parts of the bale splitter in a different state to those of Fig. 23,
Fig. 25 is a perspective view of a bale splitter according to a further embodiment of the invention,
Fig. 26 is a perspective view of the bale splitter of Fig. 25 with a portion of the bale splitter in a different state to that of Fig. 25,
Fig. 27 is a perspective view of the bale splitter of Fig. 25 with other portions of the bale splitter in a different state to that of Fig. 25,
Fig. 28 is a rear perspective view of the bale splitter of Fig. 25 in the state of Fig. 26,
Fig. 29 is a front elevational view of the bale splitter of Fig. 25 in use,
Fig. 30 is a side elevational view of the bale splitter of Fig. 25 also in use,
Fig. 31 is a front elevational view of the bale splitter of Fig. 25 in use,
Fig. 32 is a front elevational view of the bale splitter of Fig. 25 also in use,
Fig. 33 is another perspective view of the bale splitter of Fig. 25,
Fig. 34 is a further perspective view of the bale splitter of Fig. 25 in use, and
Fig. 35 is a further perspective view of the bale splitter of Fig. 25 also in use.

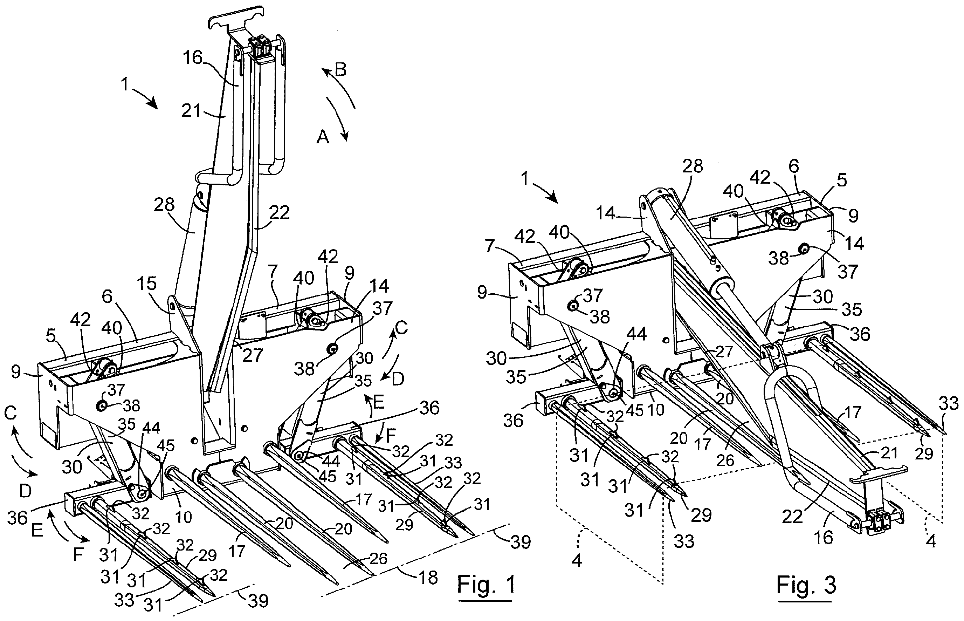

Referring to the drawings, and initially to Figs. 1 to 11 thereof, there is illustrated a bale splitter according to the invention, indicated generally by the reference numeral 1, for splitting a wrapped cylindrical bale 2 of silage material 3, and for separating the silage 3 from wrapping material of the bale 2, which in this case is plastics wrapping film 4. Such wrapped cylindrical bales 2 of silage will be well known to those skilled in the art, and in general, are of diameter in the range of 1 metre to 1.8 metres and of axial length in the order of 1.25 metres. The wrapping film 4 with which the bale is wrapped comprises a plastics film material adhesive coated on one major surface thereof.

The bale splitter 1 comprises a support element 5, which is formed by a framework 6. The framework 6 comprises a pair of spaced apart parallel transverse members, namely, an upper transverse member 7 and a lower transverse member 8, both of box section steel, welded at their respective opposite ends to respective end plates 9 of steel plate material. A lower mounting member 10 also of box section steel extending parallel with the upper and lower transverse members 7 and 8 is supported spaced apart beneath the lower transverse member 8 on downwardly extending mounting plates 12 of steel plate material. The mounting plates 12 are welded to the lower transverse member 8 and the lower mounting member 10. A front plate 14, also of steel plate material extends between and is welded to the end plates 9. A pair of spaced apart parallel upstanding members 15 also of steel plate material are welded to and extend upwardly from the lower mounting member 10 and are welded to the upper and lower transverse members 7 and 8, and extend forwardly to the front plate 14 and are welded thereto. Suitable coupling brackets (not shown) are located on the upper and lower transverse members 7 and 8 to the rear 19 thereof for coupling the support element 5 to a front end loader arm or a back actor arm of a tractor or other prime mover. Such coupling brackets for coupling an attachment to a front end loader arm or a back actor arm of a tractor or other prime mover will be well known to those skilled in the art.

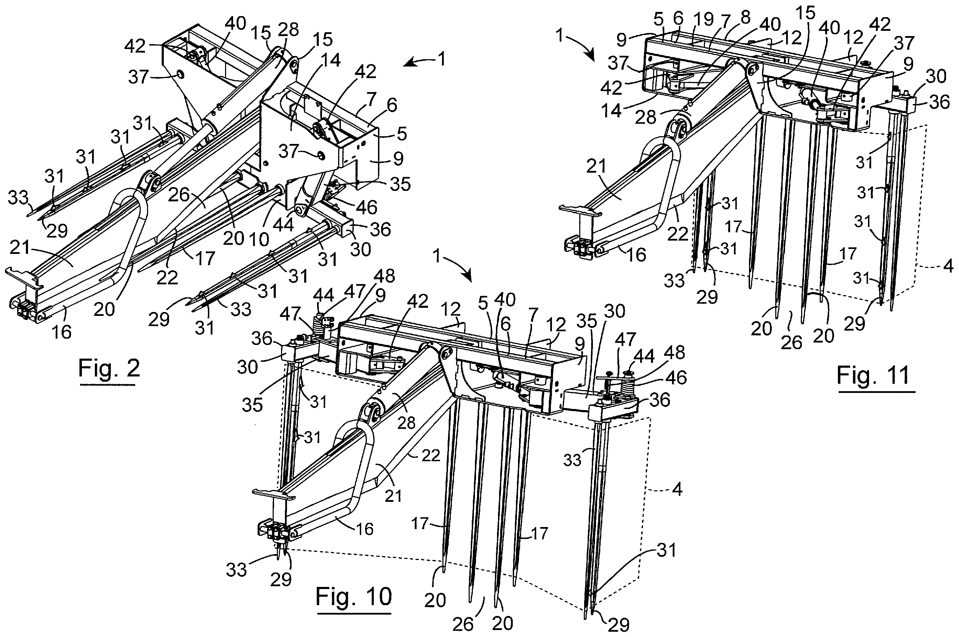

Four spaced apart parallel tines of steel, which comprise a pair of first tines, namely, a pair of central tines 20 and a pair of second tines, namely, a pair of outer tines 17, are secured to the lower mounting member 10 and extend forwardly through the front plate 14 for supporting a bale 2 to be split. The two central tines 20 define a gap 26 therebetween, and they also define a first plane 18. A knife 21 having an elongated cutting edge 22 is pivotally coupled to the framework 6 by a pivot shaft 23 extending between the upstanding members 15. Bearings 24 mounted on the upstanding members 15 pivotally carry the pivot shaft 23 which defines a knife pivot axis 25, which extends transversely relative to the tines, and about which the knife 21 is pivotal in the directions of the arrows A and B between a first state illustrated in Fig. 1 with the knife 21 extending generally upwardly, and a second state illustrated in Figs. 2 and 3 with the knife 21 extending through the gap 26 defined between the central tines 20 for splitting the bale 2. A safety guard 16 is pivotally coupled to the knife 21 adjacent a distal end thereof.

In the first state, the knife 21 defines with the central tines 20 and the outer tines 17 a space to accommodate the bale 2 between the tines 17 and 20 and the knife 21. The knife 21 and the cutting edge 22 thereof as well as the knife pivot axis 25 are configured relative to the tines 20 so that when the knife 21 is in the second state, a proximal portion 27 of the knife 21 does not extend into the gap 26 between the central tines 20, and remains above the first plane defined by the tines 17 in order to avoid severing of a part of the wrapping film 4 adjacent the front plate 14 of the support element 5, so that the wrapping film 4 of the bale 2 remains in one piece after splitting of the bale 2.

A drive means comprising a double-acting primary hydraulic ram 28 acts between the knife 21 and the upstanding members 15 for urging the knife 21 between the first and second states for splitting the bale 2.

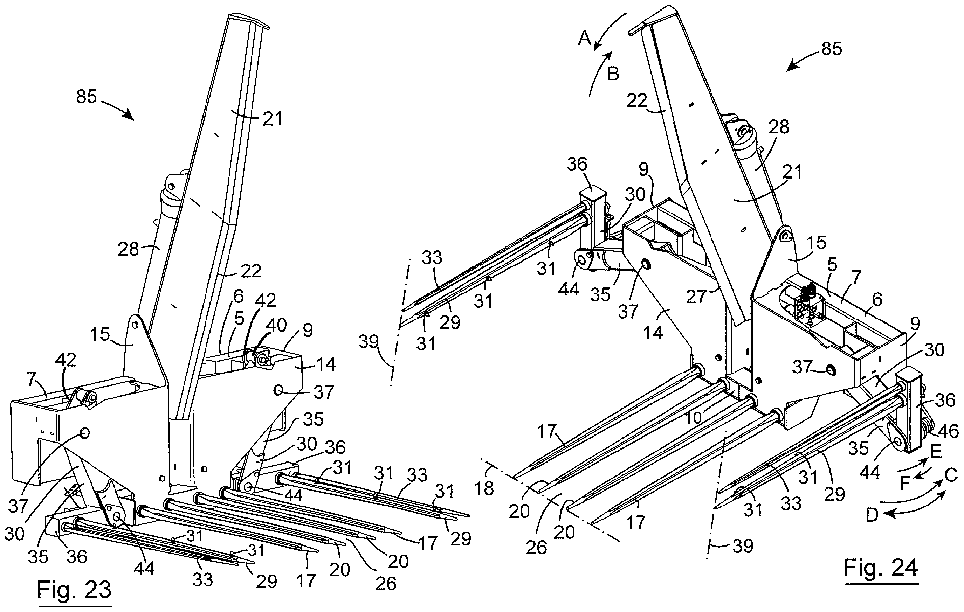

As mentioned above, the central tines 20 define a first plane 18, and in this embodiment of the invention the two outer tines 17 are not contained in the first plane 18, but rather are located above the first plane 18, so that the central tines 20 and the outer tines 17 define an arc of a circle. The circle, of which the arc forms a part, is of diameter substantially similar to the diameter of the bale 2, so that the bale 2 can be engaged and supported by the tines 17 and 20 with the tines 17 and 20 extending into the bale 2 through the wrapping film 4 at one end of the bale 2 adjacent a lower circumferential periphery of the bale 2 with the wrapping film 4 adjacent the lower circumferential periphery of the bale 2 extending beneath the tines 17 and 20. However, as will be described below with reference to Figs. 23 and 24, the outer tines 17 may lie in the first plane 18 defined by the central tines 20, and also engage the bale 2 with the wrapping film 4 adjacent the lower circumferential periphery of the bale 2 extending beneath the central tines 20 and the outer tines 17.

A pair of carrier means, which in this embodiment of the invention comprise respective elongated carrier members 29 of steel extending parallel to and spaced apart from the outer tines 17 on respective opposite sides thereof, are carried on respective carrier elements 30. Each carrier member 29 carries a plurality of primary engagement means, which in this embodiment of the invention are provided by primary piercing elements 31 of steel. The primary piercing elements 31 extend radially from the corresponding carrier member 29 for piercing and engaging the wrapping film 4 as the bale 2 is being split, and for retaining the wrapping film 4 on the carrier members 29 as the silage 3 is being separated from the wrapping film 4, as will be described in more detail below. In this case four substantially equi-spaced apart primary piercing elements 31 are provided on each carrier member 29. Each primary piercing element 31 is of radial length in the order of 25mm extending radially from the corresponding carrier member 29 and tapers to a pointed tip 32.

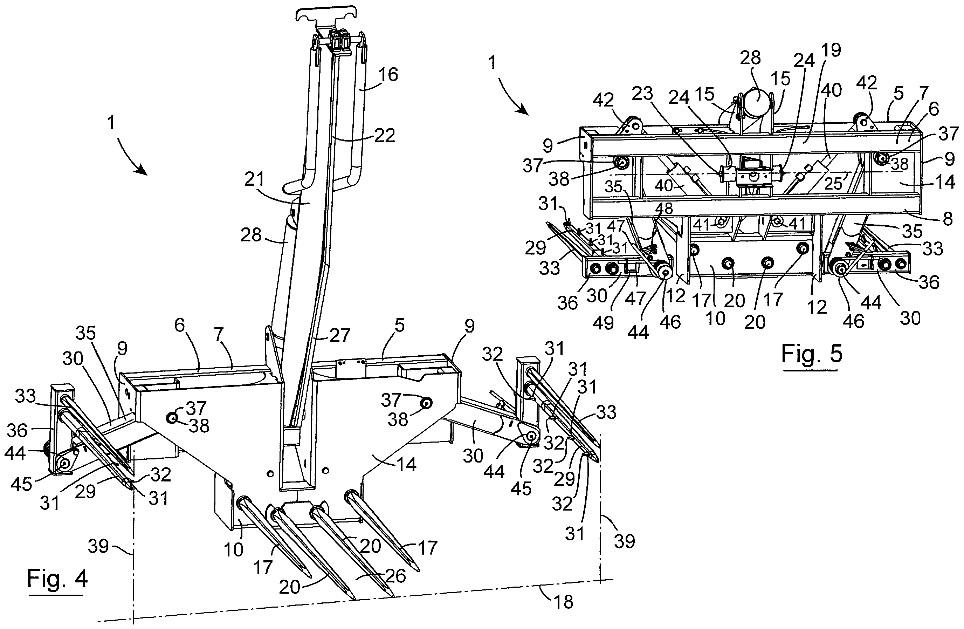

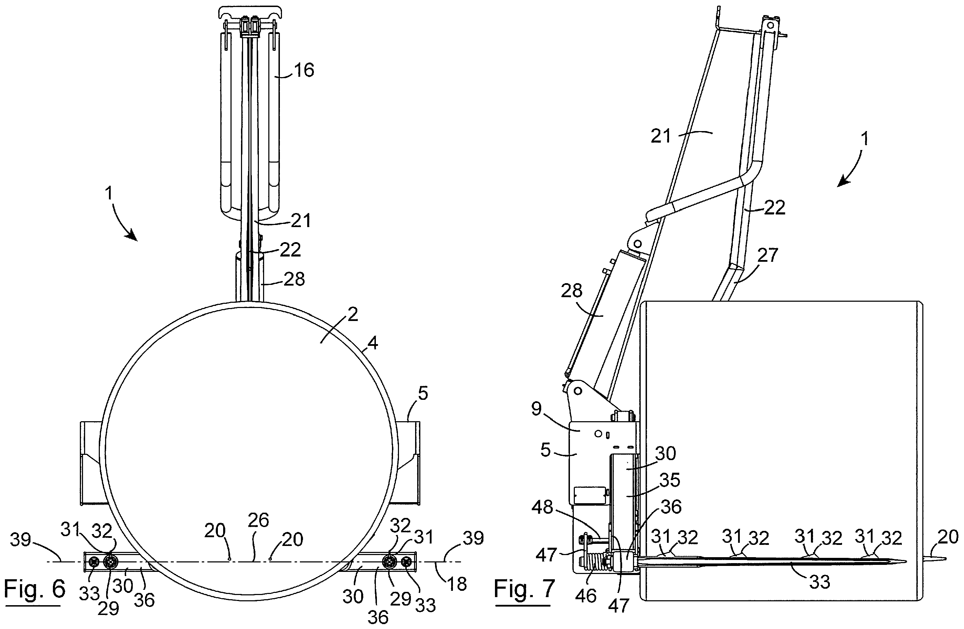

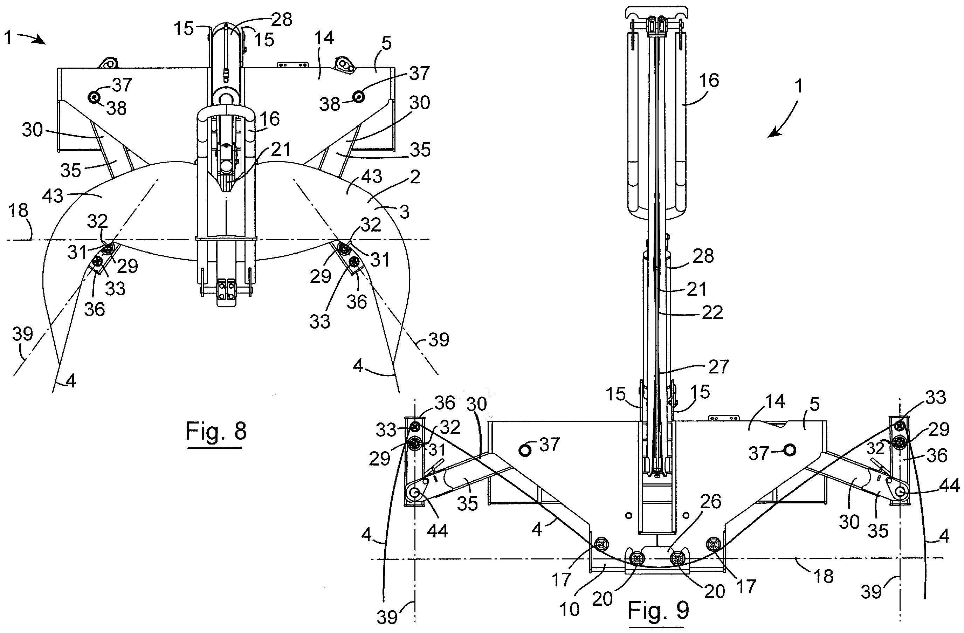

Each carrier element 30 comprises a pivot arm 35 of steel and a carrier arm 36 of steel coupled to the pivot arm 35, as will be described below, and extending from the pivot arm 35 at an angle of approximately 70°. The carrier members 29 are carried on and extend from the carrier arms 36 of the respective carrier elements 30 parallel to the tines 17 and 20. The pivot arms 35 of the respective carrier elements 30 are pivotally coupled to the framework 6 by primary pivot shafts 37 which define respective primary carrier pivot axes 38 extending parallel to and spaced apart upwardly and to respective opposite sides of the central tines 20. The carrier elements 30 are pivotal through an angle of approximately 90° in the directions C and D about the respective primary carrier pivot axes 38 between a first state illustrated in Figs. 1 and 6 with the corresponding carrier members 29 in respective first states and a second state illustrated in Figs. 4 and 9 with the corresponding carrier members 29 in respective second states, as will be described in more detail below. The spacing between the carrier members 29 and the central tines 20 is greater when the carrier members 29 are in the second state than in the first state of the carrier members 29 for assisting in the disengagement of the wrapping film 4 from the primary piercing elements 31 as will be described below.

A means for disengaging the wrapping film 4 from the primary piercing elements 31, and in turn from the carrier members 29 when the silage 3 has been separated from the wrapping film 4, in this embodiment of the invention comprises a pair of elongated release members 33 of steel. The release members 33 are carried on the carrier arms 36 of the respective carrier elements 30, and extend parallel to and are spaced apart from the corresponding carrier member 29. The carrier members 29 and the release members 33 of the respective carrier elements 30 define respective second planes 39. When the carrier elements 30 are in the first state illustrated in Figs. 1 and 6, the carrier members 29 and the release members 33 are in respective first states with the second planes 39 defined by the carrier members 29 and the corresponding ones of the release members 33 lying substantially in the first plane 18 defined by the central tines 20. When the carrier elements 30 are in the second state illustrated in Figs. 4 and 9, the carrier members 29 and the release members 33 are in respective second states and are located out of and above the first plane 18 defined by the central tines 20, with the second planes 39 defined by the carrier members 29 and the corresponding ones of the release members 33 of the respective carrier elements 30 extending substantially perpendicularly to the first plane 18 defined by the central tines 20, for disengaging the wrapping film 4 from the primary piercing elements 31, as will be described below. Additionally, the spacing between the release members 33 and the central tines 20 is greater when the release members 33 are in the second state than in the first state of the release members 33, so that as the carrier elements 30 are being pivoted about the primary carrier pivot axes 38 from the first state to the second state, the wrapping film 4 is stretched between the outer tines 17 and the release members 33, and with the carrier members 29 located beneath the corresponding release members 33, the wrapping material is disengaged from the primary piercing elements 31.

The primary piercing elements 31 are located on the carrier members 29 to extend so that in the first state of the corresponding carrier members 29, the primary piercing elements 31 are in a first state extending perpendicularly from the second planes 39 defined by the carrier members 29 and the release members 33 of the respective carrier elements 30, so that when the carrier elements 30 and the carrier members 29 are in the first states thereof, the primary piercing elements 31 are in a first state and extend upwardly from the corresponding carrier members 29 substantially perpendicularly to the first plane 18 defined by the central tines 20 for engaging the wrapping film 4 during splitting of the bale 2, and when the carrier elements 30 and the carrier members 29 are in the second states thereof, the primary piercing elements 31 are in a second state and extend substantially parallel to the first plane 18 defined by the central tines 20 for releasing of the wrapping film 4 therefrom.

In the first state, the carrier members 29 are located on respective opposite sides of the tines 17 and 20 and are spaced apart outwardly from the outer tines 17 with the tines 17 and 20 located between the carrier members 29. Additionally, in the first state the release members 33 are located on respective opposite sides of the tines 17 and 20 and are spaced apart outwardly from the carrier members 29 with the carrier members 29 and the tines 17 and 20 located between the release members 33.

A pair of urging means comprising respective double-acting secondary hydraulic rams 40 acting between anchor brackets 41 anchored in the framework 6 and pivot mounting brackets 42 extending from the corresponding pivot arms 35 urge the carrier elements 30, and in turn the carrier members 29 and the release members 33 between the first state and the second state.

Returning now to the carrier elements 30, each carrier element 30, as discussed above, comprises a pivot arm 35 and a carrier arm 36 coupled to the pivot arm 35, and extending at an angle of approximately 70° therefrom. In this embodiment of the invention the carrier arm 36 of each carrier element 30 is pivotally coupled to the corresponding pivot arm 35 by a secondary pivot shaft 44, which defines a secondary carrier pivot axis 45. The carrier arm 36 of each carrier element 30 is pivotal about the secondary carrier pivot axis 45 in the directions of the arrows E and F between a first state illustrated in Fig. 1 and a second state illustrated in Fig. 8.

When the carrier elements 30 are in the first state and when the carrier arms 36 of the respective carrier elements 30 are in the first state, the second planes 39 defined by the carrier members 29 and the corresponding ones of the release members 33 of the respective carrier elements 30 lie in the first plane 18 defined by the central tines 20. When the carrier arms 36 of respective carrier elements 30 are in the first state, and the carrier elements 30 are in the second state, the second planes 39 defined by the carrier members 29 and the corresponding ones of the release members 33 of the respective carrier elements 30 lie substantially perpendicularly to the first plane 18 defined by the central tines 20. However, when the carrier arms 36 of each carrier element 30 are in the second state illustrated in Fig. 8 and the carrier elements 30 are in the first state, the carrier members 29 and the release members 33 are located below the first plane 18 defined by the central tines 20, and additionally, the second planes defined by the carrier members 29 and the corresponding ones of the release members 33 of the respective carrier elements 30 extend at an angle from the first plane 18 defined by the central tines 20 with the respective second planes 39 diverging downwardly from the first plane 18 defined by the central tines 20.

The carrier arm 36 of each carrier element 30 is resiliently urged relative to the pivot arm 35 thereof into the first state by a resilient urging means, which in this embodiment of the invention comprises a torsion spring 46. The torsion spring 46 of each carrier element 30 is located on the secondary pivot shaft 44 with respective ends 47 of the torsion spring 46 engaged in respective brackets 48 and 49 on the pivot arm 35 and the carrier arm 36, respectively, for urging the carrier arm 36 relative to the pivot arm 35 into the first state.

The torsional force in the respective torsion springs 46 is sufficient to maintain the carrier arms 36 in the first state relative to the corresponding pivot arms 35 against most loads. However, the torsional force in the torsion springs 46 is such that when the carrier elements 30 are in the first state, and a bale 2 supported on the tines 17 and 20 is being split into two halves 43, as the halves 43 of the split bale fall onto the carrier members 29 and the release members 33, the torsion springs 46 yield under the weight of the respective halves 43 of the split bale. The yielding of the torsion springs 46 results in the carrier arms 36 pivoting downwardly about the secondary carrier pivot axes 45 relative to the pivot arms 35 into the second state in order to allow the silage 3 of the halves 43 of the split bale to fall to the ground.

Additionally, as the halves 43 of the split bale are falling to the ground, the wrapping film 4 of the split bale falls over the carrier members 29 and the release members 33, and the weight of the silage 3 of the halves 43 of the split bale as the halves 43 fall to the ground urge the wrapping film 4 into engagement with the primary piercing elements 31, which in turn results in the primary piercing elements 31 piercing and impaling the wrapping film 4 on the carrier members 29. Once most of the silage 3 of the split bale has fallen to the ground, the torsion springs 46 return the carrier arms 36 of the carrier elements 30 to the first state.

The carrier elements 30, the carrier members 29 and the release members 33 are configured so that, after the silage 3 of the bale 2 has been separated from the wrapping film 4, when the carrier arms 36 are in the first state and the carrier elements 30 are in the second state with the wrapping film 4 passing beneath the tines 17 and 20, the release members 33 in the second state thereof co-operate with the tines 17 and 20 for stretching the wrapping film between the tines 17 and 20 and the release members 33, and also between the release members 33 for disengaging the wrapping film 4 from the primary piercing elements 31, and in turn from the carrier members 29, so that the wrapping film 4 can be dislodged and discharged from the bale splitter 1.

The use of the bale splitter 1 in splitting a cylindrical bale 2 of silage 3 wrapped with the wrapping film 4 will now be described. With the bale splitter 1 coupled to a front end loader arm or a back actor arm of a tractor, the bale splitter 1 is lowered to the ground with the first plane 18 defined by the central tines 20 extending substantially parallel to the ground. With the knife 21 in the first state, and with the carrier elements 30 and the carrier and release members 29 and 33 in the second states thereof, see Fig. 4, the bale splitter 1 is urged into engagement with the bale 2 to be split with the central tines 20 and the outer tines 17 extending into the bale 2 through one end thereof with the tines 17 and 20 puncturing the wrapping film 4 and extending into the bale 2 adjacent the lower circumferential peripheral portion of the bale 2, so that the wrapping film 4 adjacent the lower circumferential peripheral portion of the bale 2 adjacent the tines 17 and 20 extends beneath the tines 17 and 20.

The bale splitter 1 is then raised above the ground with the bale 2 supported on the tines 17 and 20. While the bale splitter 1 is being raised above the ground, the carrier elements 30 are urged by the secondary rams 40 in the direction of the arrow D from the second state to the first state for in turn urging the carrier and release members 29 and 33 from the second state to the first state, see Fig. 6. The knife 21 is urged downwardly in the direction of the arrow A by the primary ram 28 from the first state to the second state to split the bale 2 into the two halves 43, see Fig. 8. Since the carrier elements 30 are in the first state, as the bale 2 is being split, the outer portions of the two halves 43 of the split bale which are not supported by the tines 17 and 20 cause the halves 43 of the split bale to fall outwardly onto the adjacent ones of the carrier members 29 and the release members 33. The weight of the two halves 43 on the carrier members 29 and the release members 33 result in the carrier arms 36 being pivoted downwardly about the secondary carrier pivot axes 45 in the direction of the arrows F from the first state thereof to the second state against the torsional force of the torsion springs 46, thereby allowing the halves 43 of the split bale to fall to the ground on respective opposite sides of the outer tines 17. As the two halves 43 of the split bale are falling from the tines 17 and 20 to the ground, the wrapping film 4 is draped over the carrier members 29 and the release members 33. The weight of the two halves 43 of the split bale falling onto and downwardly past the respective carrier members 29 urges the wrapping film 4 of the bale 2 into engagement with the carrier and release members 29 and 33 and into engagement with the primary piercing elements 31 of the carrier members 29, thereby impaling the wrapping film 4 on the carrier members 29. Once the silage 3 of the two halves 43 of the split bale have fallen downwardly past the carrier members 29 and the release members 33, the carrier arms 36 are returned to the first state by the urging action of the corresponding torsion springs 46. At this stage the wrapping film 4 extends beneath the tines 17 and 20 and over the carrier and release members 29 and 33, and is impaled on the carrier members 29 by the primary piercing elements 31, see Fig. 3. The knife 21 is returned by the primary hydraulic ram 28 in the direction of the arrow B from the second state to the first state.

The front end loader arm or back actor arm of the tractor on which the bale splitter 1 is mounted is further raised above the ground, and is operated for tilting the bale splitter 1, so that the tines 17 and 20 and the carrier and release members 29 and 33 extend in a generally downwardly direction from the support element 5, for discharging silage 3 from the wrapping film 4 impaled on the carrier members 29. The front end loader arm or back actor arm is then operated for shaking the bale splitter 1 for in turn disengaging and dislodging any remaining silage 3 from the wrapping film 4.

With the tines 17 and 20 and the carrier and release members 29 and 33 still extending in a generally downwardly direction from the support element 5, the secondary rams 40 are operated for urging the carrier elements 30 in the direction of the arrows C from the first state to the second state, see Figs. 10 and 11, for in turn urging the carrier and release members 29 and 33 likewise from the first states to the second states, so that the wrapping film 4 extending between the release members 33 and passing beneath the tines 17 and 20 is stretched between the release members 33, thereby resulting in the wrapping film 4 being disengaged from the primary piercing elements 31 of the carrier members 29, see Figs. 10 and 11.

With the wrapping film 4 disengaged from the primary piercing elements 31 of the carrier members 29, the secondary rams 40 are operated for urging the carrier elements 30 in the direction of the arrows D from the second state to the first state, for in turn urging the carrier and release members 29 and 33 from the second state to the first state, thereby releasing any tension in the wrapping film 4 between the release members 33 and the tines 17 and 20, see Fig. 11. With the tines 17 and 20, the carrier members 29 and the release members 33 still extending downwardly from the support element 5, the front end loader arm or the back actor arm of the tractor is again operated to shake the bale splitter 1, to in turn shake the wrapping film 4 free from the bale splitter 1 to deposit the wrapping film in a location separate from the silage 3. Prior to returning the carrier elements 30 to the first state to release the tension in the wrapping film 4, the tractor would typically be driven to a location at which the wrapping film 4 is to be deposited.

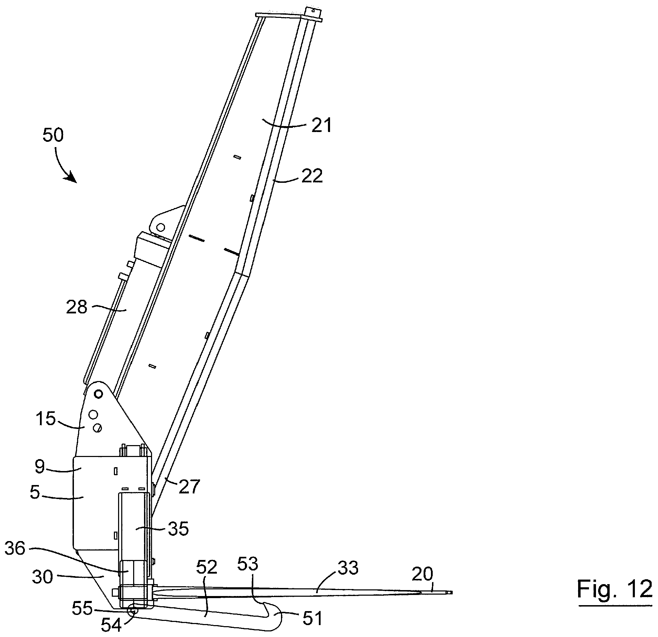

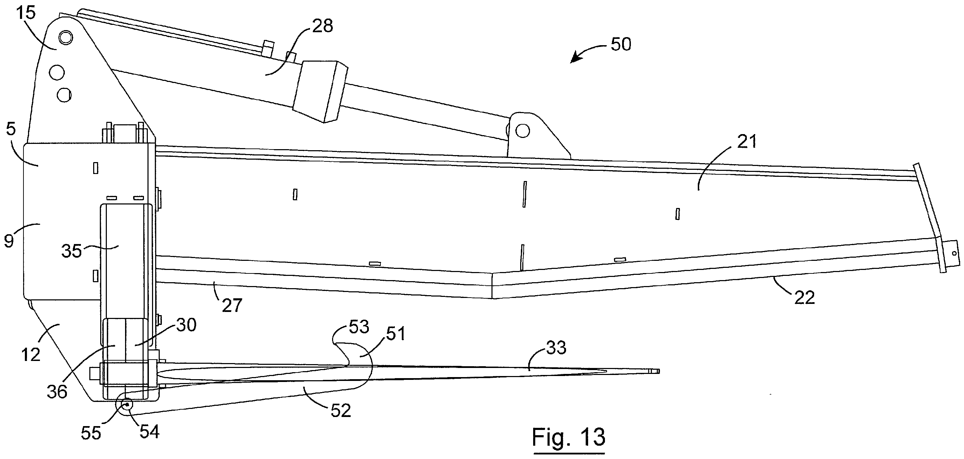

Referring now to Figs. 12 to 14, there is illustrated a bale splitter according to another embodiment of the invention, indicated generally by the reference numeral 50 also for splitting a wrapped cylindrical bale 2. The bale splitter 50 is substantially similar to the bale splitter 1 and similar components are identified by the same reference numerals. In this embodiment of the invention only two tines, namely, a pair of central tines 20 are provided extending from the lower mounting member 10. The main difference between the bale splitter 50 and the bale splitter 1 is that the primary engagement means in this embodiment of the invention are provided by a pair of engagement hooks 51, which instead of being mounted on the carrier elements 30 are carried on carrier arms 52 which are coupled to the lower mounting member 10. Each engagement hook 51 terminates in a pointed piercing tip 53 for piercing and engaging the wrapping film 4 and for impaling the wrapping film 4 on the corresponding engagement hook 51. The carrier arms 52 of the engagement hooks 51 are pivotally carried on pivot pins 54 which define a common secondary carrier pivot axis 55 which extends transversely of the central tines 20. The engagement hooks 51 are pivotal about the secondary carrier pivot axis from an engaged first state illustrated in Fig. 13 with the piercing tips 53 of the respective engagement hooks 51 extending above the first plane defined by the central tines 20 for engaging and impaling the wrapping film 4 on the engagement hooks 51, and a disengaged second state illustrated in Fig. 12 with the piercing tips 53 of the engagement hooks 51 located beneath the first plane for disengaging the wrapping film 4. A means for moving the engagement hooks 51 between the first and second states comprises a pair of hydraulic rams (not shown) mounted in the support element 5 and acting between the support element 5 and the carrier arms 52 of the respective engagement hooks 51. The rams (not shown) are operable for pivoting the carrier arms 52 and in turn the engagement hooks 51 from the second state to the first state for urging the piercing tips 53 into engagement with the wrapping film 4, and from the first state to the second state for disengaging the wrapping film 4 from the piercing tips 53 and in turn from the engagement hooks 51.

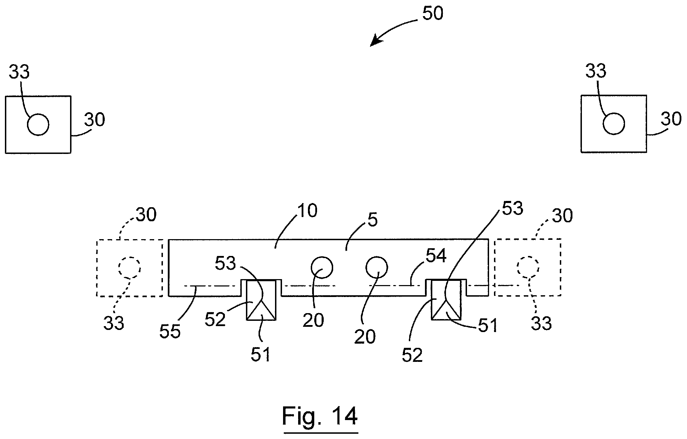

The release members 33 are carried on the corresponding carrier elements 30 in similar manner as the release members 33 are carried on the carrier elements 30 of the bale splitter 1, and are likewise moveable between a first state illustrated in Figs. 12 and 13, and in a second state illustrated in full lines in Fig. 14, which are similar to the first and second states of the release members 33 of the bale splitter 1.

In use, with the bale splitter 50 mounted on the arm of a front end loader or back actor of a tractor, the bale splitter 50 is urged into engagement with a wrapped bale 2 as already described with reference to the bale splitter 1 of Figs. 1 to 11 with the tines 20 extending into the bale 2 from one end thereof and puncturing the wrapping film 4, and extending within the bale 2 adjacent the circumferential periphery of the bale 2 towards the lower end of the bale 2. During entry of the tines 20 into the bale, the engagement hooks 51 are retained by the rams (not shown) in the disengaged second state, and the release members 33 are in the second state. The release members 33 are illustrated in Fig. 14 in the first state in broken lines and in the second state in full lines. The bale splitter 50 is then raised above the ground and the release members 33 are urged from the second state to the first state by the secondary rams 40. The engagement hooks 51 are then urged from the disengaged second state to the engaged first state for engaging the piercing tips 53 in the wrapping film. The knife 21 is urged by the primary ram 28 from the first state to the second state for splitting the bale 2 in two halves similar to the halves 43 described with reference to the bale splitter 1. As the bale 2 is split, the halves of the split bale fall sidewardly, outwardly downwardly onto the ground, thus urging the wrapping film 4 into engagement with the piercing tips 53 of the two engagement hooks 51.

The bale splitter 50 is then raised further above the ground and tilted so that the tines 20 and the release members 33 extend in a generally downwardly direction from the support element 5 to discharge the silage 3 from the wrapping film 4. By shaking the bale splitter 50 by the arm of the front end loader or the back actor to which the bale splitter 50 is coupled, any remaining silage 3 is disengaged and dislodged from the wrapping film 4. The engagement hooks 51 are urged from the engaged first state to the disengaged second state, and the release members 33 are then urged from the first state to the second state to stretch the wrapping film 4 extending beneath the tines 20 between the release members 33, so that the combined action of the release members 33 being urged from the first to the second state and the engagement hooks 51 being urged from the engaged first to the disengaged second state results in the wrapping film being disengaged from the piercing tips 53 of the engagement hooks 51. The release members 33 are then urged from the second state to the first state to release any tension in the wrapping film 4 between the release members 33. Further shaking of the bale splitter 50 releases the wrapping film 4 from the release members 33, and the wrapping film 4 is then dislodged from the bale splitter 50 at a location separate from the silage 3.

Otherwise, the bale splitter 50 and its use is similar to the bale splitter 1.

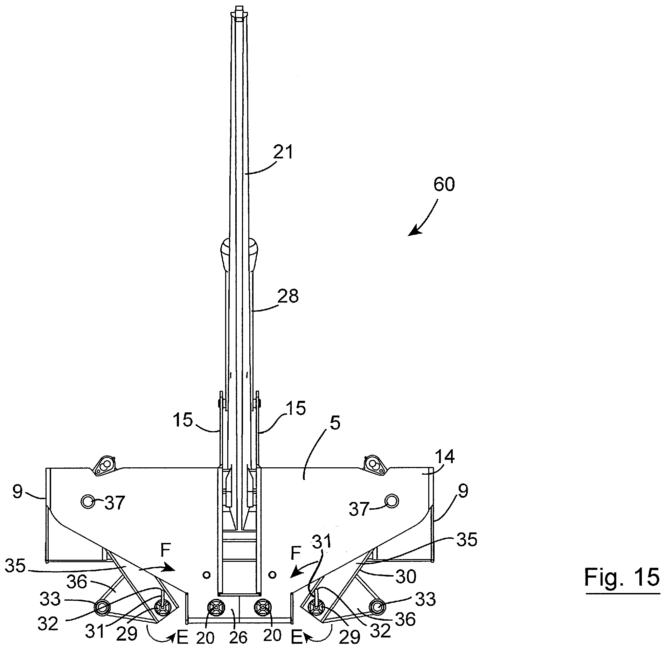

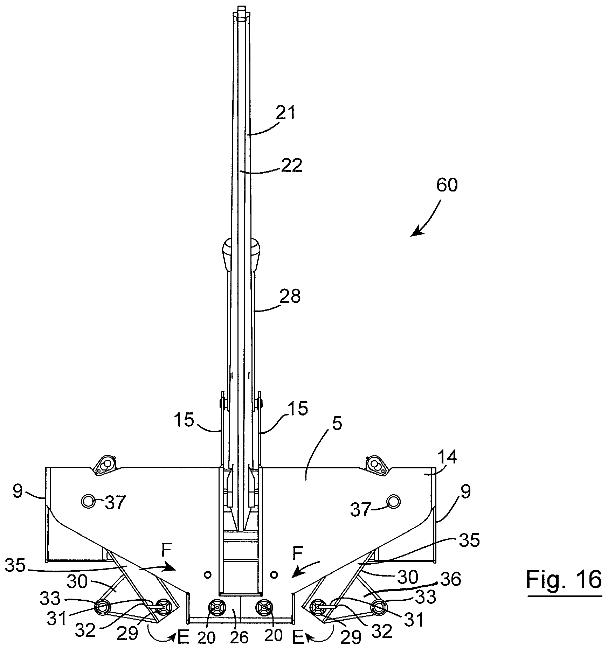

Referring now to Figs. 15 and 16, there is illustrated a bale splitter also according to the invention and indicated generally by the reference numeral 60 also for splitting a wrapped cylindrical bale similar to the wrapped cylindrical bale 2. The bale splitter 60 is substantially similar to the bale splitter 1, and similar components are identified by the same reference numerals. The main difference between the bale splitter 60 and the bale splitter 1 is in the carrier elements 30 and the carrier members 29. In this embodiment of the invention each carrier element 30 is formed as a single integral element with the carrier arm 36 rigidly coupled to the pivot arm 35 thereof. Each carrier member 29 is rotatably mounted in bearings (not shown) in the carrier arm 36 of the corresponding carrier element 30, and is rotatable through an angle of approximately 90° about its respective central longitudinally extending geometrical axis in the directions of the arrows E and F between an engaged state illustrated in Fig. 15 with the primary piercing elements 31 extending substantially upwardly for engaging the wrapping film 4 when the corresponding carrier element 30 in the first state, and a disengaged state illustrated in Fig. 16 with the primary piercing elements 31 extending substantially horizontally outwardly from the carrier member 29 when the corresponding carrier element 30 in the first state. A drive means for rotating the carrier members 29 between the engaged and the disengaged states comprise respective rotary hydraulic motors or hydraulic rams (not shown) mounted in the respective carrier elements 30.

In use, with the bale splitter 60 mounted on the arm of a front loader or a back actor of a tractor, the tines 20 are engaged with a wrapped bale as already described with the carrier elements 30 and in turn the carrier members 29 and the release members 33 in the second state. Prior to urging the knife 21 downwardly from the first state to the second state to split the bale, the carrier elements 30 are pivoted from the second state to the first state for in turn urging the carrier members 29 and the release members 33 from the second to the first state. If the primary piercing elements 31 are not already in the engaged state, the carrier members 29 are rotated in the direction of the arrows F to urge the primary piercing elements 31 into the engaged state. The bale is then split by the knife 21. As the halves of the split bale fall outwardly sidewardly and downwardly to the ground, the plastic film of the bale is urged into engagement with the primary piercing elements 31 so that the wrapping film is impaled by the primary piercing elements 31 of the carrier members 29.

The knife 21 is returned to the first state. The bale splitter 60 is then further raised above the ground and is tilted so that the tines 20 and the carrier and release members 29 and 33 extend in a generally downwardly direction from the support element 5 for discharging the silage 3 from the wrapping film 4. The carrier elements 30 are then pivoted from the first state to the second state for urging the carrier and release members 29 and 33 from the first states to the second states, and simultaneously, the carrier members 29 are rotated through 90° in the direction of the arrow E for urging the primary piercing elements 31 from the engaged state to the disengaged state. The urging of the carrier and release members 29 and 33 from the first to the second state and the simultaneous rotating of the carrier members 29 in the direction of the arrows E for urging the primary piercing elements 31 from the engaged to the disengaged state results in the primary piercing elements 31 disengaging the wrapping film 4. The carrier elements 30 are then urged from the second state to the first state for in turn urging the carrier and release members 29 and 33 from the second state to the first state, and by shaking the bale splitter 60, the wrapping film 4 is dislodged from the bale splitter 60.

Otherwise, the bale splitter 60 and its operation is similar to that of the bale splitter 1.

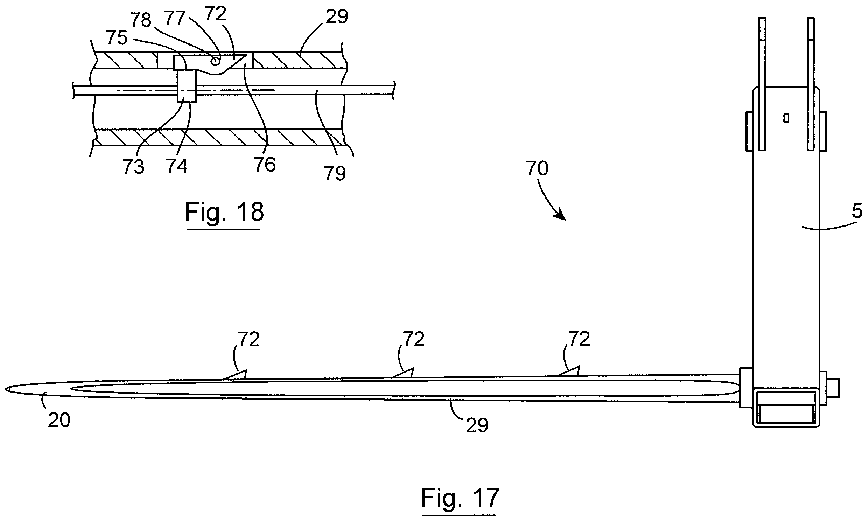

Referring now to Figs. 17 and 18, there is illustrated a portion of a bale splitter also according to the invention, indicated generally by the reference numeral 70 also for splitting a wrapped cylindrical bale of silage. The bale splitter 70 is substantially similar to the bale splitter 1 and similar components are identified by the same reference numerals. However, in this embodiment of the invention the carrier members 29 instead of being mounted on pivotally mounted carrier elements, the carrier members 29 are rigidly mounted on the lower mounting member 10 of the support element 5. In this embodiment of the invention the carrier members 29 are located on the lower mounting member 10 spaced apart from each other on respective opposite sides of the tines 20 and sufficiently spaced apart from the tines 20 to allow the tines to be urged into the bale with the carrier members 29 located exteriorly of the bale.

The primary engagement means, in this embodiment of the invention are provided by primary piercing elements 72 which are pivotally mounted in slots 76 in the carrier members 29 on pivot pins 77 which define respective pivot axes 78 which extend transversely of the carrier members 29 and of the tines 20. Three primary piercing elements 72 are located on each carrier member 29. The primary piercing elements 72 are pivotal about the corresponding pivot axes 78 from engaged first states illustrated in Fig. 17 extending through the corresponding slots 76 in the carrier members 29, and disengaged second states illustrated in Fig. 18 with the primary piercing elements 72 located wholly within the carrier members 29.

A means for moving the primary piercing elements 72 between the first and second states comprises respective camming members 73 located at corresponding intervals along and rigidly mounted on a drive shaft 79 extending longitudinally through the corresponding carrier members 29. Each camming member 73 is provided with a circumferential camming surface 74 for engaging a cam follower 75 of the corresponding one of the primary piercing elements 31. The camming members 73 are configured so that by rotating the camming members 73 in the corresponding carrier member 29 through 180°, the camming surfaces 74 co-operate with corresponding cam followers 75 of the primary piercing elements 72 for urging the primary piercing elements 72 between the engaged first state and the disengaged second state. Springs (not shown) urge the cam followers 75 of the respective primary piercing elements 72 into engagement with the camming members 73 for in turn urging the primary piercing elements 72 into the engaged first states as the camming members 73 are rotated. A drive means (not shown) comprising respective hydraulic drive motors are provided in the respective carrier members 29 for rotating the camming members 73 within the carrier members 29 for in turn urging the primary piercing elements 72 between the engaged state and the disengaged state. Alternatively, the camming surfaces may be configured to co-operate with corresponding cam followers of the primary piercing elements 72 so that by urging the camming members longitudinally in opposite directions in the respective carrier members 29, the camming surfaces would co-operate with the cam followers on the primary piercing elements 72 for urging the primary piercing elements 72 between the engaged first state and the disengaged second state.

In this embodiment of the invention the release members are omitted.

In use, with the bale splitter 70 mounted on the arm of a front end loader or a back actor of a tractor and with the primary piercing elements 72 in the disengaged second state, the bale splitter 70 is urged into engagement with the bale in the manner already described with reference to the bale splitter 1, with the tines 20 located within the bale, and the carrier members 29 located exteriorly of the bale. With the tines 20 of the bale splitter 70 engaging the bale, the bale is raised above the ground, and the primary piercing elements 72 are urged by the camming members 73 from the disengaged second state to the engaged first state. The bale is then split, and the halves of the bale on falling sidewardly outwardly and downwardly onto the ground urge the wrapping film 4 into engagement with the primary piercing elements 72. The bale splitter 70 is then raised further above the ground and tilted so that the tines 20 and the carrier members 29 extend in a generally downwardly direction from the support element 5 for discharging the silage 3 from the wrapping film 4. Any remaining silage is disengaged from the wrapping film 4 by shaking the bale splitter 70. The primary piercing elements 72 are urged from the engaged first state to the disengaged second state by the camming members 73, thus disengaging the wrapping film. The wrapping film is then dislodged from the bale splitter 70 by shaking the bale splitter.

Otherwise, the bale splitter 70 and its use is similar to that of the bale splitter 1.

While the bale splitter 70 has been described with the carrier members being rigidly mounted on the lower mounting member 10 and thus fixed relative to the tines 20, it is envisaged that in certain cases, the carrier members of the bale splitter 70 may be carried on pivotally mounted carrier elements similar to the carrier elements 30 of the bale splitter 1. In which case, when tines 20 of the bale splitter 70 are being urged into engagement with the bale, the carrier members 29 would be located in the second state with the primary piercing elements in the disengaged second state. In order to disengage the primary piercing elements 72 from the wrapping film 4, the carrier elements 30 and in turn the carrier members 29 would be urged from the first state to the second state simultaneously as the primary piercing elements 72 are being pivoted from the engaged first state to the disengaged second state.

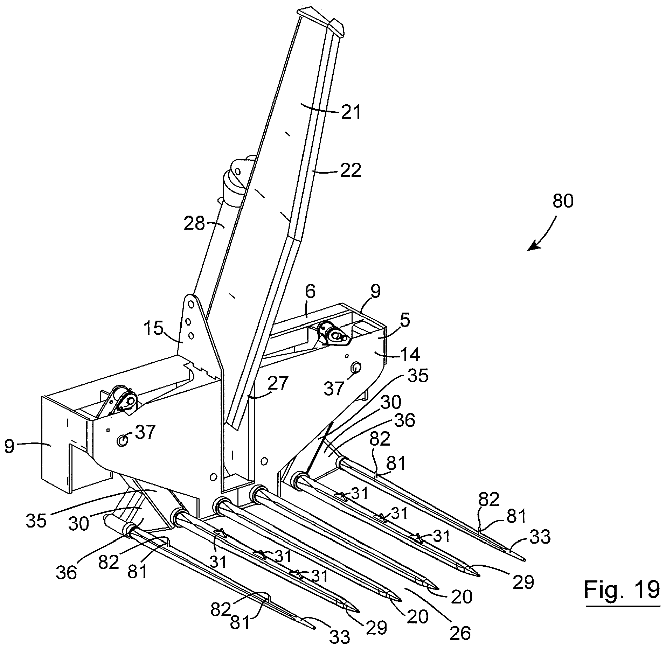

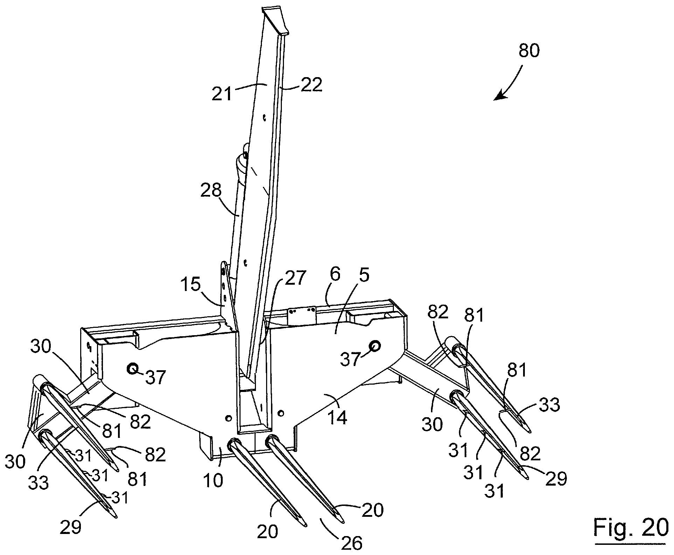

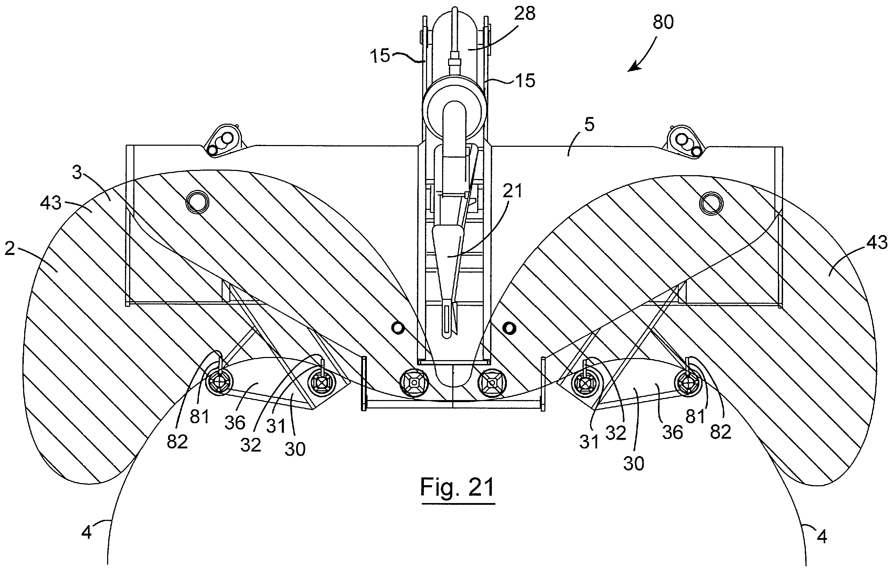

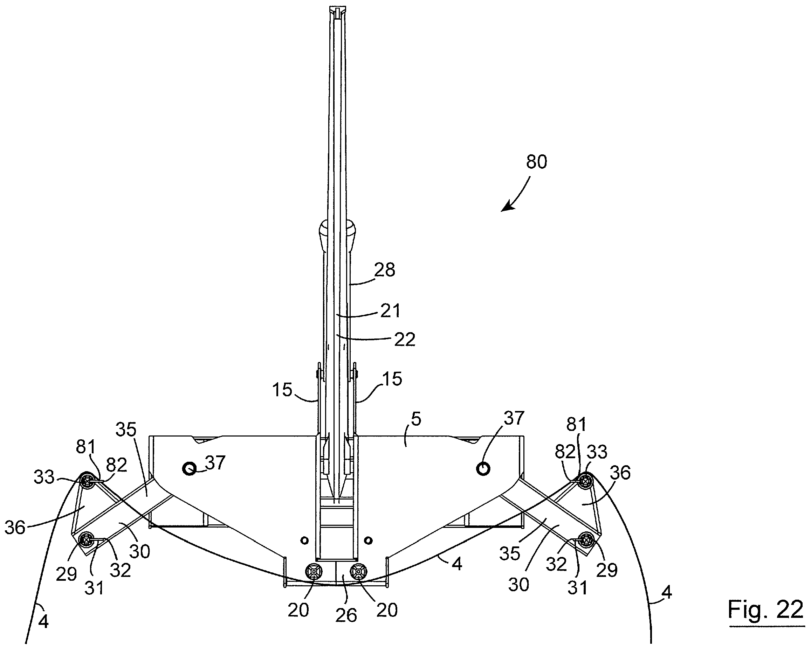

Referring now to Figs. 19 to 22, there is illustrated a bale splitter according to a further embodiment of the invention, indicated generally by the reference numeral 80, also for splitting a wrapped cylindrical bale 2 of silage 3. The bale splitter 80 is substantially similar to the bale splitter 1, and similar components are identified by the same reference numerals. However, in this embodiment of the invention the bale splitter 80 is provided with only two spaced apart parallel central tines 20 extending from the lower mounting member 10. Additionally, each carrier element 30 is provided as a single integral element with the carrier arm 36 rigidly coupled to the pivot arm 35 thereof. The main difference between the bale splitter 80 and the bale splitter 1 is that each release member 33 is provided with secondary engagement means, namely, two spaced apart secondary piercing elements 81 extending radially from the release member 33 for engaging the wrapping film 4 of the bale 2. One of the secondary piercing elements 81 of each release member 33 is located towards the proximal end thereof, and the other one of the secondary piercing elements 81 is located towards the distal end of each release member 33. The secondary piercing elements 81 are substantially similar to the primary piercing elements 31 and each secondary piercing element 81 tapers to a pointed tip 82. The secondary piercing elements 81 are provided on the release members 33 for engaging and preventing slipping of the wrapping film 4 over the release members 33 as the release members 33 are being urged by the carrier elements 30 from the first state to the second state in order to stretch the wrapping film 4 which extends beneath the tines 20 between the release elements 33 for in turn disengaging the wrapping film 4 from the primary piercing elements 31 and in turn from the carrier members 29.

However, the secondary piercing elements 81 are configured on the release elements 33 so that when the release members 33 are in the first state, and the second planes 39 defined by the carrier members 29 and the corresponding ones of the release members 33 lie in the first plane 18 defined by the tines 20, the secondary piercing elements 81 extend upwardly substantially perpendicularly to the first plane 18 defined by the tines 20. Thus, when the carrier elements 30 are pivoted from the first state to the second state with the release members 33 in the second state thereof, the secondary piercing elements 81 extend substantially parallel to the first plane 18 defined by the tines 20, thereby permitting release of the wrapping film 4 from the secondary piercing elements 81. Thus, when the release members 33 are returned from the second state to the first state after the silage 3 has been discharged from the wrapping film 4, and the wrapping film 4 has been disengaged from the primary piercing elements 31 of the corresponding carrier members 29, the wrapping film 4 is readily discharged from the bale splitter 80 by shaking the bale splitter 80 with the tines 20, the carrier members 29 and the release members 33 extending downwardly from the support element 5.

Otherwise, bale splitter 80 and its use and operation is similar to that of the bale splitter 1.

Referring now to Figs. 23 and 24, there is illustrated a bale splitter according to another embodiment of the invention, indicated generally by the reference numeral 85, for splitting a wrapped cylindrical bale similar to the bale 2 of silage 3 wrapped with wrapping film 4. The bale splitter 85 is substantially similar to the bale splitter 1 described with reference to Figs. 1 to 11, and similar components are identified by the same reference numerals. The only difference between the bale splitter 85 and the bale splitter 1 is in the arrangement of the two central tines 20 and the two outer tines 17. In this embodiment of the invention both the central tines 20 and the outer tines 17 lie in the same common plane, and accordingly, the central tines 20 and the outer tines 17 together define the first plane 18.

Otherwise, the bale splitter 85 is similar to the bale splitter 1, as is the use and operation of the bale splitter 85 similar to the bale splitter 1.

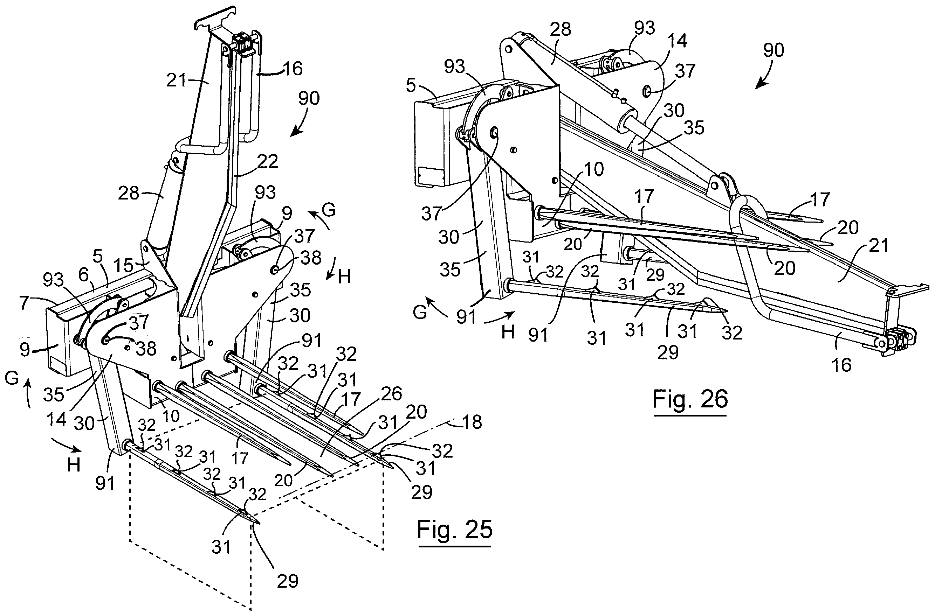

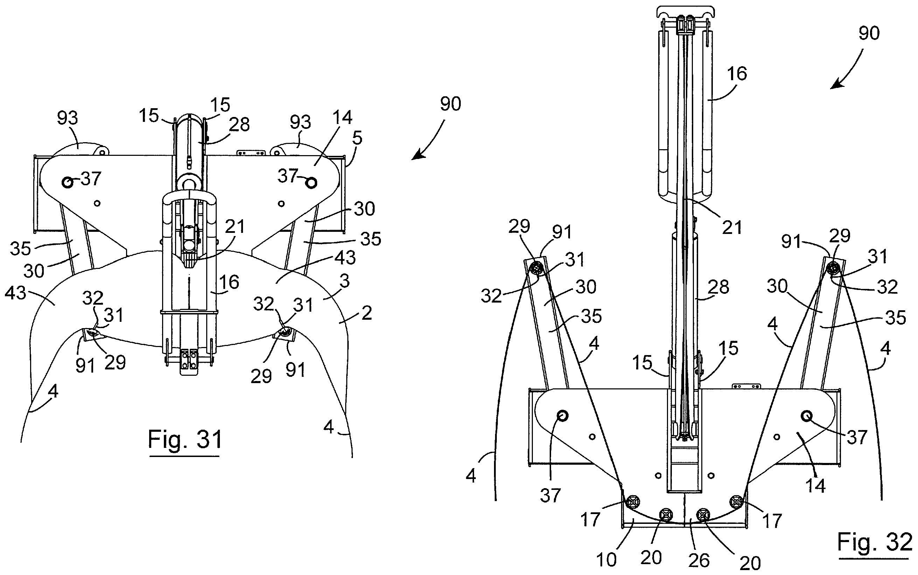

Referring now to Figs. 25 to 35, there is illustrated a bale splitter according to another embodiment of the invention, indicated generally by the reference numeral 90, also for splitting a wrapped bale 2 of silage 3 wrapped with wrapping film 4. The bale splitter 90 is somewhat similar to the bale splitter 1 described with reference to Figs. 1 to 11, and similar components are identified by the same reference numerals. The main difference between the bale splitter 90 and the bale splitter 1 is that in the bale splitter 90 the release members have been omitted, and the carrier members 29 are carried on respective carrier elements 30, which in this embodiment of the invention comprise only the pivot arm 35. Each carrier member 29 is carried on and extends from a distal end 91 of the pivot arm 35 of the corresponding carrier element 30 and extends parallel to the central tines 20 and the outer tines 17. Four primary engagement means, namely, four spaced apart primary piercing elements 31, which are similar to the primary piercing elements 31 of the bale splitter 1, extend radially from the carrier members 29.

The central tines 20 and the outer tines 17 are carried on the lower mounting member 10 in a similar arcuate configuration to that of the central tines 20 and the outer tines 17 of the bale splitter 1.

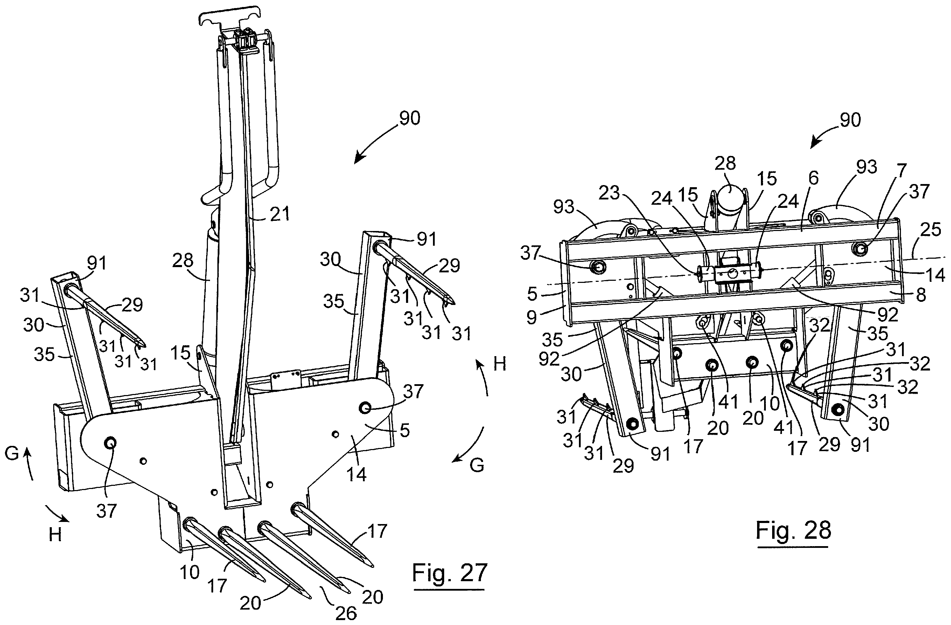

The pivot arms 35 are pivotally coupled to the support element 5 by primary pivot shafts 37 which in turn define primary carrier pivot axes 38 in similar manner and at similar locations in the support element 5 as that of the primary pivot shafts 37 of the bale splitter 1. The pivot arms 35 are pivotal through an angle of approximately 180° about the primary carrier pivot axes 38 in the directions of the arrows G and H between a first state illustrated in Figs. 25 and 26, and a second state illustrated in Fig. 27. In the first state of the pivot arms 35, the carrier members 29 are located in a first state below the first plane 18 defined by the central tines 20 and on respective opposite sides of the tines 17 and 20, with the primary piercing elements 31 in a first state extending in a generally upwardly direction from the carrier members 29 and substantially perpendicularly to the first plane 18 defined by the central tines 20 for engaging the wrapping film 4 as the bale 2 is being split by the knife 21. In the second state of the carrier element 30 the carrier members 29 are located in a second state well above the first plane 18 defined by the central tines 20 and on respective opposite sides of the tines 17 and 20, and with the primary piercing elements 31 in a second state extending generally downwardly and substantially perpendicularly to the first plane 18 defined by the central tines 20, so that the wrapping film 4 disengages the primary piercing elements 31 in the second state. Additionally, the spacing between the carrier members 29 and the tines 17 and 20 in the second state of the carrier members 29 is greater than the spacing between the carrier members 29 and the tines 17 and 20 when the carrier members 29 are in the first state for stretching the wrapping film between the outer tines 17 and the carrier members 29 when the carrier members 29 are in the second state for further assisting in disengaging the wrapping film 4 from the primary piercing elements 31.

In this embodiment of the invention the means for disengaging the wrapping film 4 from the primary piercing elements 31 comprises a means for moving the carrier members 29 from the first state thereof to the second state thereof, for in turn moving the primary piercing elements 31 from the first state to the second state, so that as the carrier members 29 and the primary piercing elements 31 are being urged from the first states to the second states, the wrapping film 4 is stretched between the tines 17 and 20 and the carrier members 29 for in turn disengaging the wrapping film 4 from the primary piercing elements 31. In this embodiment of the invention the means for moving the carrier members 29 between the first and second states comprises an actuator means, namely, a pair of secondary hydraulic rams 92, which are similar to the secondary hydraulic rams 40. However, in this embodiment of the invention the secondary hydraulic rams 92 act between the corresponding anchor brackets 41 which are located in the framework 6 and respective linkage mechanisms 93 which are coupled to the corresponding secondary rams 92 and the corresponding pivot arms 35 for pivoting the pivot arms 35 between the first and second states about the primary carrier pivot axes 38, for in turn urging the carrier members 29 and the primary piercing elements 31 between the first states and the second states thereof.

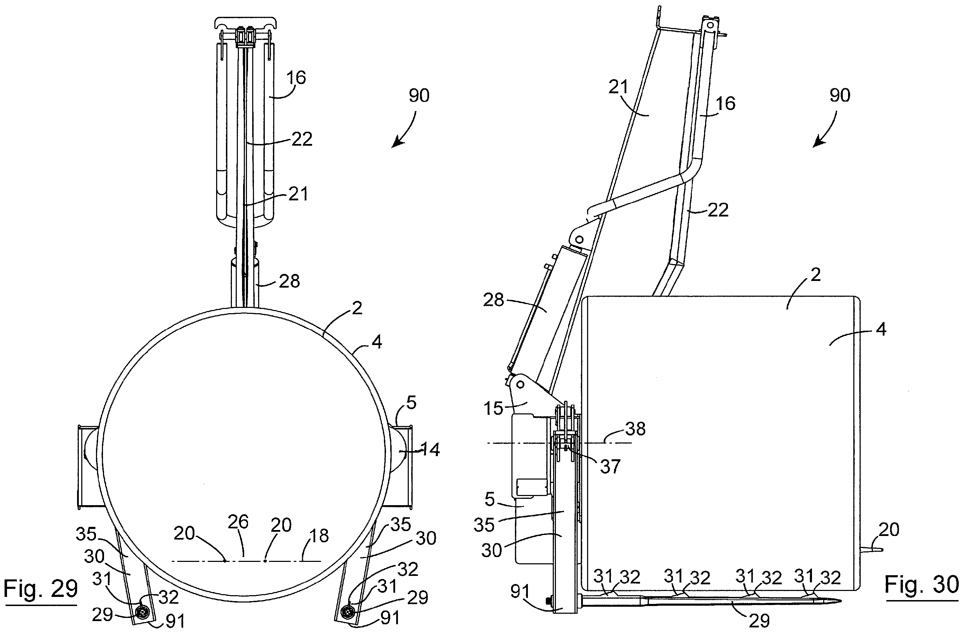

In use, the bale splitter 90 is mounted on a back actor arm or a front loader arm of a tractor or other suitable prime mover. With the pivot arms 35 of the carrier elements 30 in the second state and in turn with the carrier members 29 and the primary piercing elements 31 also in the second states, and the knife 21 in the first state, the bale splitter 90 is urged into engagement with the bale 2 in similar manner as the bale splitter 1 is urged into engagement with the bale 2. The central tines 20 and the outer tines 17 engage the lower portion of the bale 2 through one end thereof with the tines 17 and 20 engaged in the bale adjacent the lower circumferential peripheral portion of the bale 2, and with the wrapping film 4 adjacent the lower circumferential peripheral portion of the bale 2 beneath the tines 17 and 20. The bale splitter 90 is then raised by the back actor arm or front loader arm above the ground. The carrier elements 30 are then pivoted about the primary carrier pivot axes 38 from the second state to the first state with the carrier members 29 located below the first plane 18 defined by the central tines 20, see Fig. 29.

The primary ram 28 is then operated for urging the knife 21 through the bale 2 and in turn through the gap 26 defined between the central tines 20 for splitting the bale 2 into two halves 43. As the bale 2 is split into the two halves 43, the silage 3 of the halves 43 of the split bale fall to the ground on respective opposite sides of the tines 17 and 20. As the silage 3 of the halves 43 of the split bale are falling to the ground, the wrapping film 4 is draped over the carrier members 29 and the weight of the silage 3 in the two halves 43 of the split bale urges the wrapping film 4 into engagement with the primary piercing elements 31 on the carrier members 29, so that the primary piercing elements 31 pierce and engage the wrapping film 4.

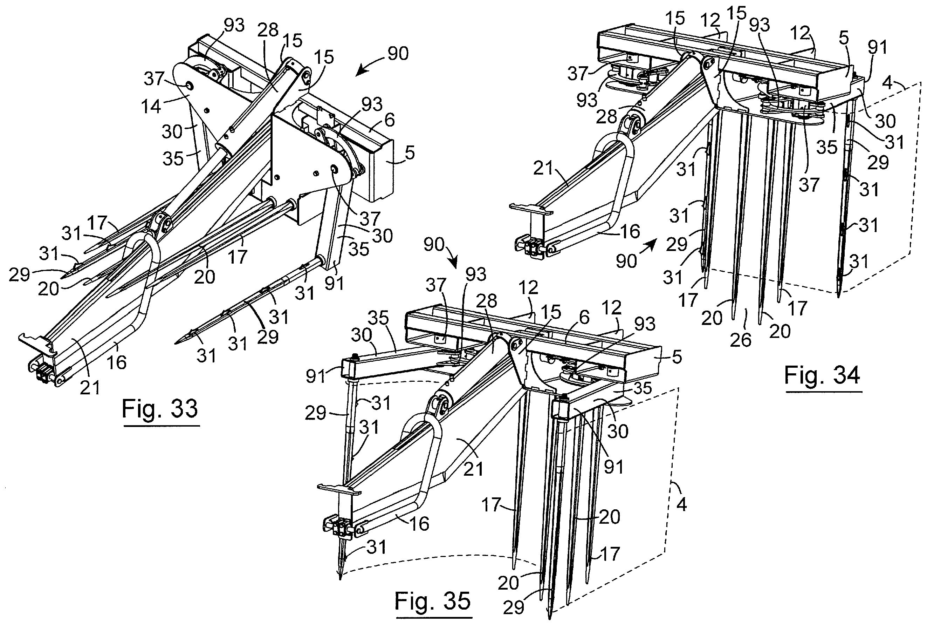

The bale splitter 90 is then further raised by the arm of the back actor or front loader of the tractor and is oriented so that the tines 17 and 20 and the carrier members 29 extend in a generally downwardly direction from the support element 5 with the wrapping film 4 engaged and retained by the primary piercing elements 31 on the carrier members 29, see Fig. 34. The bale splitter 90 is subjected to shaking by the arm of the back actor or front loader of the tractor in order to shake any remaining silage 3 of the bale 2 from the wrapping film 4.

With the tines 17 and 20 and the carrier members 29 still extending in a generally downwardly direction from the support element 5, the carrier elements 30 are pivoted by the secondary rams 92 about the primary carrier pivot axes 38 in the direction of the arrow G from the first state to the second state for in turn urging the carrier members 29 and the primary piercing elements 31 from the first states thereof to the second states, so that as the carrier members 29 are being urged from the first state to the second state and as the primary piercing elements 31 are being oriented from the first state to the second state, the wrapping film 4 is stretched between the tines 17 and 20 and the carrier members 29, and disengaged from the primary piercing elements 31.

With the tines 17 to 20 and the carrier members 29 still extending in a generally downwardly direction from the support element 5, the bale splitter 90 is subjected to further shaking by the arm of the back actor or loader arm of the tractor in order to shake the wrapping film 4 free from the bale splitter 90.

Otherwise the bale splitter 90 and its operation is similar to the bale splitter 1 and its operation.

It will be appreciated that the engagement hooks of the bale splitter 50 may be mounted on the carrier elements 30, instead of on the lower mounting member 10. Indeed, it is envisaged that the engagement hooks instead of being pivotally mounted on the lower mounting member 10 may be rigidly mounted thereon, and would not be pivotal or otherwise moveable between first and second states. Similarly, if the engagement hooks were mounted on the carrier elements 30, the engagement hooks could be rigidly mounted thereon or pivotally mounted thereon.

It will also be appreciated that the release members may be located at different spacings from the carrier members, depending on the type of bale being split.

It is also envisaged that the bale splitters of the embodiments of the invention described with reference to Figs. 1 to 11 and 23 and 24 may be provided with secondary engagement means on the release members.

Needless to say, any other suitable carrier elements besides those described may be used for carrying the carrier and release members.

While the bale splitters have been described for splitting a wrapped cylindrical bale, the bale splitters may be used for splitting any type of wrapped bale, be it cylindrical, parallelepiped or otherwise shaped. It will also be appreciated that while the bale splitter has been described for splitting a wrapped bale which has been wrapped with a plastics film material, the bale may be wrapped with any type of wrapping material, for example, net material or both net and film wrapping material, or any other suitable wrapping material. While the bale splitters have been described for splitting bales of silage material, the bale splitters may be used for splitting bales of any other forage material, or any other materials, be they forage or non-forage materials. Indeed, the bale splitters may be used for splitting bales of any material.

It is also envisaged that while three primary piercing elements have been described on each carrier member, any number of primary piercing elements from one upwards may be provided. It is also envisaged that the primary piercing elements may not necessarily be aligned longitudinally with each other, but rather, may be offset circumferentially relative to each other. Further, it is envisaged that while in the bale splitter 80 each of the release members have been described as comprising two secondary piercing elements, it will be appreciated that any number of secondary piercing elements may be provided on each release member from one upwards.

While the bale splitters have been described as comprising a support element and a framework of a particular construction, the support element may be of any suitable construction or shape.

It will also be appreciated that while in some of the embodiments of the bale splitter, four tines have been provided, and in other only two tines have been provided, it will be readily apparent to those skilled in the art that any suitable number of tines may be provided.

While the second planes defined by the respective carrier members and the corresponding ones of the release members have been described as lying in the first plane defined by the central tines when the carrier members and the release members are in the first state, while this is advantageous, it is not essential. It is envisaged that the second plane may lie above or below the first plane when the carrier members and the corresponding ones of the release members are in the first state.

It will also be appreciated that while the carrier elements have been described as being pivotal through 90° in some embodiments of the invention, and have been described as being pivotal through 180° in another embodiment of the invention, the carrier elements may be pivotal through any other suitable or desired angle between the first and second states.

Additionally, while the primary piercing means have been described as comprising primary piercing elements of a particular shape and construction, the primary piercing elements may be of any other desired shape or construction.

It will also be appreciated that carrier members and release members of other shape and construction may also be provided.

It is envisaged that although the primary piercing elements and the carrier members have been described as being moveable simultaneously with the corresponding release members, in certain cases the carrier members and the release members may be moveable independently of each other, and similarly, it is envisaged that the primary piercing elements may be moveable independently of the release members. Indeed, in certain cases, it is envisaged that the release members may be provided as stationary members, and either the carrier members or the primary piercing elements would be moveable between the first and second states thereof. Alternatively, it is envisaged that the primary piercing elements and/or the carrier members may be stationary elements or members, and the release members would be moveable between the first and second states thereof.

## Claims

1. A bale splitter comprising a support element (5) adapted for mounting on a front end loader arm or a back actor arm of a tractor or other prime mover, a pair of spaced apart first tines (20) extending from the support element (5), a knife (21) moveably mounted on the support element (5) and being co-operable with the first tines (20) for splitting the bale, and a primary engagement means (31,51) for engaging the wrapping material, **characterised in that** a disengagement means (33) is provided, and the disengagement means (33) is co-operable with the first tines (20) for disengaging the wrapping material from the primary engagement means (31,51).

2. A bale splitter as claimed in Claim 1 **characterised in that** the primary engagement means (31,51) is configured for engaging and retaining the wrapping material on the bale splitter while the material of the bale is being separated from the wrapping material.

3. A bale splitter as claimed in Claim 1 or 2 **characterised in that** at least one of the primary engagement means (31,51) and the disengagement means (33) is moveable relative to the first tines (20) for disengaging the wrapping material from the primary engagement means (31,51).

4. A bale splitter as claimed in any preceding claim **characterised in that** the primary engagement means (31,51) and the disengagement means (33) are moveable relative to the first tines (20) for disengaging the wrapping material from the primary engagement means (31,51).

5. A bale splitter as claimed in any preceding claim **characterised in that** the disengagement means (33) is moveable relative to the first tines (20) from a first state with the wrapping material engaged by the primary engagement means (31,51) to a second state with the wrapping material disengaged from the primary engagement means (31,51).

6. A bale splitter as claimed in Claim 5 **characterised in that** the primary engagement means (31,51) is moveable relative to the first tines (20) from a first state with the wrapping material engaged by the primary engagement means (31,51) to a second state with the wrapping material disengaged from the primary engagement means (31,51).

7. A bale splitter as claimed in Claim 6 **characterised in that** the primary engagement means (31,51) and the disengagement means (33) are moveable simultaneously between the respective first states and the respective second states thereof.

8. A bale splitter as claimed in Claim 6 or 7 **characterised in that** a pair of carrier means (29) is provided, each carrier means (29) carrying at least one primary engagement means (31), one of the carrier means (29) being located to one side of the first tines (20), and the other carrier means (29) being located to the opposite side of the first tines (20) with the first tines (20) located between the respective carrier means (29).

9. A bale splitter as claimed in Claim 8 **characterised in that** each carrier means (29) is moveable relative to the first tines (20) for moving the at least one primary engagement means (31) between the first state of the primary engagement means (31) and the second state thereof.

10. A bale splitter as claimed in Claim 8 or 9 **characterised in that** one disengagement means (33) is provided corresponding to each carrier means (29).

11. A bale splitter as claimed in Claim 10 **characterised in that** each disengagement means (33) comprises a release member (33), and a pair of the release members (33) are provided, one of the release members (33) being located to one side of the first tines (20), and the other release member (33) being located to the opposite side of the first tines (20) with the first tines (20) being located between the respective release members (33).

12. A bale splitter as claimed in Claim 11 **characterised in that** the carrier means (29) are located between the release members (33), and are spaced apart from the release members (33) and from the first tines (20).

13. A bale splitter as claimed in Claim 11 or 12 **characterised in that** each carrier means (29) is carried on a corresponding carrier element (30), the carrier element (30) being moveable between a first state and a second state for urging the carrier means (29) between the first state and the second state, respectively, thereof, and the carrier element (30) of each carrier means (29) carries the corresponding one of the release members (33).

14. A bale splitter as claimed in Claim 13 **characterised in that** each carrier element (30) is pivotally coupled to the support element (5) about a primary carrier pivot axis (38) extending substantially parallel to the first tines, and is pivotal between the first and second states thereof about the primary carrier pivot axis (38).

## Patentansprüche

1. Ballenspalter umfassend ein Stützelement (5), das zum Montieren an einem Frontladerarm oder an einem hinteren Arbeitsarm eines Traktors oder an einer anderen Zugmaschine eingerichtet ist, ein Paar voneinander beanstandete erste Zinken (20), die sich von dem Stützelement (5) weg erstrecken, ein Messer (21), das beweglich an dem Stützelement (5) montiert ist und das zum Spalten des Ballens zusammen mit den ersten Zinken (20) bedienbar ist, und ein erstes Kopplungsmittel (31,51) zum Koppeln des Wickelmaterials, **dadurch gekennzeichnet, dass** ein Entkopplungsmittel (33) vorgesehen ist, und dass das Entkopplungsmittel (33) zusammen mit den ersten Zinken (20) zum Entkoppeln des Wickelmaterials von dem ersten Kopplungsmittel (31,51) bedienbar ist.

2. Ballenspalter nach Anspruch 1, **dadurch gekennzeichnet, dass** das erste Kopplungsmittel (31,51) dazu eingerichtet ist, das Wickelmaterial auf dem Ballenspalter zu koppeln und zurückzuhalten, während das Material des Ballens von dem Wickelmaterial getrennt wird.

3. Ballenspalter nach Anspruch 1 oder 2, **dadurch gekennzeichnet, dass** wenigstens eines des ersten Kopplungsmittels (31,51) und des Entkopplungsmittels (33) relativ zu den ersten Zinken (20) bewegbar ist, um das Wickelmaterial von dem ersten Kopplungsmittel (31,51) zu entkoppeln.

4. Ballenspalter nach einem der vorhergehenden Ansprüche, **dadurch gekennzeichnet, dass** das erste Kopplungsmittel (31,51) und das Entkopplungsmittel (33) relativ zu den ersten Zinken (20) bewegbar sind, um das Wickelmaterial von dem ersten Kopplungsmittel (31,51) zu entkoppeln.

5. Ballenspalter nach einem der vorhergehenden Ansprüche, **dadurch gekennzeichnet, dass** das Entkopplungsmittel (33) relativ zu den ersten Zinken (20) von einem ersten Zustand, bei dem das Wickelmaterial durch das erste Kopplungsmittel (31,51) gekoppelt ist, zu einem zweiten Zustand bewegbar ist, bei dem das Wickelmaterial von dem ersten Kopplungsmittel (31,51) entkoppelt ist.

6. Ballenspalter nach Anspruch 5, **dadurch gekennzeichnet, dass** das erste Kopplungsmittel (31,51) relativ zu den ersten Zinken (20) von einem ersten Zustand, bei dem das Wickelmaterial durch das erste Kopplungsmittel (31,51) gekoppelt ist, zu einem zweiten Zustand bewegbar ist, bei dem das Wickelmaterial von dem ersten Kopplungsmittel (31,51) entkoppelt ist.

7. Ballenspalter nach Anspruch 6, **dadurch gekennzeichnet, dass** das erste Kopplungsmittel (31,51) und das Entkopplungsmittel (33) gleichzeitig zwischen deren jeweiligen ersten Zuständen und deren jeweiligen zweiten Zuständen bewegbar sind.

8. Ballenspalter nach Anspruch 6 oder 7, **dadurch gekennzeichnet, dass** ein Paar von Trägermitteln (29) vorgesehen ist, wobei jedes Trägermittel (29) wenigstens ein erstes Kopplungsmittel (31) trägt, wobei eines der Trägermittel (29) auf der einen Seite der ersten Zinken (20) angeordnet ist, und das andere Trägermittel (29) auf der gegenüberliegenden Seite der ersten Zinken (20) angeordnet ist, wobei die ersten Zinken (20) zwischen den entsprechenden Trägermitteln (29) angeordnet sind.

9. Ballenspalter nach Anspruch 8, **dadurch gekennzeichnet, dass** jedes Trägermittel (29) relativ zu den ersten Zinken (20) bewegbar ist, um das wenigstens eine erste Kopplungsmittel (31) zwischen dem ersten Zustand des ersten Kopplungsmittels (31) und dessen zweiten Zustand zu bewegen.

10. Ballenspalter nach Anspruch 8 oder 9, **dadurch gekennzeichnet, dass** ein Entkopplungsmittel (33) entsprechend zu jedem Trägermittel (29) vorgesehen ist.

11. Ballenspalter nach Anspruch 10, **dadurch gekennzeichnet, dass** jedes Entkopplungsmittel (33) ein Entbindungsteil (33) umfasst, und ein Paar von Entbindungsteilen (33) vorgesehen ist, wobei eines der Entbindungsteile (33) auf der einen Seite der ersten Zinken (20) angeordnet ist, und wobei das andere Entbindungsteil (33) auf der gegenüberliegenden Seite der ersten Zinken (20) angeordnet ist, wobei die ersten Zinken (20) zwischen den entsprechenden Entbindungsteilen (33) angeordnet sind.

12. Ballenspalter nach Anspruch 11, **dadurch gekennzeichnet, dass** die Trägermittel (29) zwischen den Entbindungsteilen (33) angeordnet sind, und getrennt von den Entbindungsteilen (33) und von den ersten Zinken (20) angeordnet sind.

13. Ballenspalter nach Anspruch 11 oder 12, **dadurch gekennzeichnet, dass** jedes Trägermittel (29) von einem zugehörigen Trägerelement (30) getragen ist, wobei das Trägerelement (30) zwischen einem ersten Zustand und einem zweiten Zustand bewegbar ist, um das Trägermittel (29) jeweils zwischen dessen ersten Zustand und dessen zweiten Zustand zu bewegen, und wobei das Trägerelement (30) des Trägermittels (29) das zugehörige eine der Entbindungsteile (33) trägt.

14. Ballenspalter nach Anspruch 13, **dadurch gekennzeichnet, dass** jedes Trägerelement (30) schwenkbar mit dem Stützelement (5) über eine erste Trägerschwenkachse (38) verbunden ist, die sich im Wesentlichen parallel zu den ersten Zinken erstreckt, und zwischen deren ersten und zweiten Zuständen über die erste Trägerschwenkachse (38) schwenkbar ist.

## Revendications

1. Fendeuse de balle comprenant un élément de support (5) adapté pour un montage sur un bras de chargeur d'extrémité avant ou un bras d'acteur arrière d'un tracteur ou d'un autre appareil moteur, une paire de premiers fourchons espacés (20) s'étendant à partir de l'élément de support (5), un couteau (21) monté de manière mobile sur l'élément de support (5) et pouvant coopérer avec les premiers fourchons (20) pour fendre la balle, et un moyen de mise en prise principal (31, 51) pour entrer en prise avec le matériau d'emballage, **caractérisée en ce qu'**un moyen de désengagement (33) est prévu, et le moyen de désengagement (33) peut coopérer avec les premiers fourchons (20) pour désengager le matériau d'emballage du moyen de mise en prise principal (31, 51).

2. Fendeuse de balle selon la revendication 1, **caractérisée en ce que** le moyen de mise en prise principal (31, 51) est configuré pour entrer en prise avec et retenir le matériau d'emballage sur la fendeuse de balle tandis que le matériau de la balle est séparé du matériau d'emballage.

3. Fendeuse de balle selon la revendication 1 ou 2, **caractérisée en ce qu'**au moins l'un du moyen de mise en prise principal (31, 51) et du moyen de désengagement (33) est mobile par rapport aux premiers fourchons (20) pour désengager le matériau d'emballage du moyen de mise en prise principal (31, 51).

4. Fendeuse de balle selon l'une quelconque des revendications précédentes, **caractérisée** en ce le moyen de mise en prise principal (31, 51) et le moyen de désengagement (33) sont mobiles par rapport aux premiers fourchons (20) pour désengager le matériau d'emballage du moyen de mise en prise principal (31, 51).

5. Fendeuse de balle selon l'une quelconque des revendications précédentes, **caractérisée en ce que** le moyen de désengagement (33) est mobile par rapport aux premiers fourchons (20) depuis un premier état avec le matériau d'emballage mis en prise avec le moyen de mise en prise principal (31, 51) jusqu'à un second état avec le matériau d'emballage désengagé du moyen de mise en prise principal (31, 51).

6. Fendeuse de balle selon la revendication 5, **caractérisée en ce que** le moyen de mise en prise principal (31, 51) est mobile par rapport aux premiers fourchons (20) depuis un premier état avec le matériau d'emballage mis en prise avec le moyen de mise en prise principal (31, 51) jusqu'à un second état avec le matériau d'emballage désengagé du moyen de mise en prise principal (31, 51).

7. Fendeuse de balle selon la revendication 6, **caractérisée en ce que** le moyen de mise en prise principal (31, 51) et le moyen de désengagement (33) sont mobiles simultanément entre leurs premiers états respectifs et leurs seconds états respectifs.

8. Fendeuse de balle selon la revendication 6 ou 7, **caractérisée en ce qu'**une paire de moyens porteurs (29) est prévue, chaque moyen porteur (29) portant au moins un moyen de mise en prise principal (31), un des moyens porteur (29) étant situé sur un côté des premiers fourchons (20), et l'autre moyen porteur (29) étant situé sur le côté opposé des premiers fourchons (20) avec les premiers fourchons (20) situés entre les moyens porteurs respectifs (29).

9. Fendeuse de balle selon la revendication 8, **caractérisée en ce que** chaque moyen porteur (29) est mobile par rapport aux premiers fourchons (20) pour déplacer le au moins un moyen de mise en prise principal (31) entre le premier état du moyen de mise en prise principal (31) et son second état.

10. Fendeuse de balle selon la revendication 8 ou 9, **caractérisée en ce qu'**un moyen de désengagement (33) est prévu correspondant à chaque moyen porteur (29).

11. Fendeuse de balle selon la revendication 10, **caractérisée en ce que** chaque moyen de désengagement (33) comprend un élément de libération (33) et une paire d'éléments de libération (33) est prévue, un des éléments de libération (33) étant situé sur un côté des premiers fourchons (20) et l'autre élément de libération (33) étant situé sur le côté opposé des premiers fourchons (20), les premiers fourchons (20) étant situés entre les éléments de libération respectifs (33).

12. Fendeuse de balle selon la revendication 11, **caractérisée en ce que** les moyens porteurs (29) sont situés entre les éléments de libération (33) et sont espacés des éléments de libération (33) et des premiers fourchons (20).

13. Fendeuse de balle selon la revendication 11 ou 12, **caractérisée en ce que** chaque moyen porteur (29) est porté sur un élément porteur correspondant (30), l'élément porteur (30) étant mobile entre un premier état et un second état pour presser les moyens porteurs (29) entre le premier état et le second état, respectivement, de celui-ci, et l'élément porteur (30) de chaque moyen porteur (29) porte l'élément de libération correspondant (33).

14. Fendeuse de balle selon la revendication 13, **caractérisée en ce que** chaque élément porteur (30) est couplé de manière pivotante à l'élément de support (5) autour d'un axe de pivot porteur principal (38) s'étendant sensiblement de manière parallèle aux premiers fourchons, et peut pivoter entre son premier et second états autour de l'axe de pivot porteur principal (38).
